# FASCICULE DE BREVET EUROPEEN

(11) **EP 2 803 572 B1**
(45) Date de publication et mention de la délivrance du brevet: **28.10.2015**
(21) Numéro de dépôt: 14001385.5
(22) Date de dépôt: 16.04.2014
(51) Int. Cl.: B64C 27/58, B64C 27/64, F15B 13/04, F15B 20/00

(54) **Distributeur hydraulique double d'une servocommande de manoeuvre des pales d'un rotor de giravion**
Hydraulischer Doppelverteiler einer Servosteuerung zum Steuern der Blätter des Rotors eines Drehflügelflugzeugs
Dual hydraulic dispenser of a servocontrol for operating the blades of a rotorcraft rotor

(30) Priorité: 17.05.2013 FR 1301144
(43) Date de publication de la demande: 19.11.2014
(73) Titulaire: Airbus Helicopters, 13725 Marignane Cedex (FR)
(72) Inventeur: Bihel, Jean-Romain, F-13740 LE Rove (FR); Leguay, Pascal, F-13980 Alleins (FR); Marger, Thibaut, F-13180 Gignac-LA-Nerthe (FR)
(74) Mandataire: GPI & Associés

(56) Documents cités:
- FR-A1- 2 444 825
- US-A- 3 529 514
- US-A- 4 128 047

## Description

La présente invention est du domaine des aéronefs à voilure(s) tournantes(s) équipés d'au moins un rotor entraîné en rotation par un groupe de motorisation. La présente invention relève plus particulièrement des servocommandes équipant les rotors de giravion pour faire varier l'incidence des pales d'un tel rotor.

Les giravions sont équipés d'au moins un rotor principal à axe sensiblement vertical procurant au moins la sustentation du giravion. Dans le cas spécifique d'un hélicoptère, le rotor principal procure aussi la propulsion du giravion et son guidage en tangage et en roulis.

Les giravions sont encore couramment équipés d'au moins un dispositif anti-couple tel que formé d'un rotor annexe à axe sensiblement horizontal apte en outre à procurer un guidage en lacet du giravion. Un tel rotor annexe est par exemple un rotor de queue, ou par exemple encore au moins une hélice propulsive dans le cas d'un hélicoptère à vitesses élevées de propulsion.

Pour faire varier l'attitude en vol du giravion, un pilote génère des commandes de vol provoquant une variation de l'incidence des pales composant la voilure tournante dudit au moins un rotor. Le pilote est potentiellement un pilote humain ou un pilote automatique. La variation de l'incidence des pales est obtenue par une manoeuvre des pales provoquant une variation de leur pas cycliquement ou collectivement. Plus particulièrement, les pales sont montées articulées sur le rotor en pivotement sur elles-mêmes autour de leur direction générale d'extension. Le pivotement des pales sur elles-mêmes associé à leur mise en rotation autour de l'axe de rotation du rotor procurent la variation de leur pas cycliquement et/ou collectivement.

A cet effet et en considérant par exemple un rotor principal, un plateau cyclique comporte un plateau inférieur non tournant et un plateau supérieur tournant associé, afin de modifier l'incidence de chacune des pales en fonction de leur position individuelle en azimut. Le plateau inférieur est manoeuvrable selon trois lignes de commande de vol distinctes et le plateau supérieur est relié à chacune des pales du rotor par un jeu de bielles respectives. Le plateau inférieur peut être placé suivant une quelconque orientation dans l'espace par rapport au mat du rotor sur lequel le plateau inférieur est guidé.

Un tel agencement du plateau cyclique lui confère une mobilité axiale tout en étant oscillant dans tous les sens en rotule pour provoquer la variation du pas des pales selon les commandes de vol opérées par le pilote. Les efforts pour mouvoir le plateau cyclique étant potentiellement importants, il est utile d'assister le pilote dans les efforts à fournir pour manoeuvrer les pales.

C'est pourquoi il est courant d'exploiter des servocommandes pour faire varier le pas des pales. Les servocommandes peuvent assister un pilote humain vis-à-vis des efforts qu'il doit fournir pour faire varier le pas des pales par l'intermédiaire d'une chaîne mécanique de transmission de puissance. Les servocommandes peuvent encore être pilotées par un actionneur en fonction de commandes de vol générées par un pilote automatique.

Classiquement, une telle servocommande comprend un vérin hydraulique à au moins un corps de vérin double effet alimenté en fluide sous pression depuis une source de fluide équipant le giravion. Le fluide est plus particulièrement un fluide incompressible, huile notamment, favorisant la puissance et la précision obtenues pour manoeuvrer les pales.

Le vérin hydraulique est potentiellement un vérin à simple corps de vérin ou un vérin à multiple corps de vérin, chaque corps de vérin logeant une tige. Une mobilité relative entre la tige et le corps de vérin qui la reçoit est obtenue par admission de fluide à l'intérieur du corps de vérin, ladite mobilité relative étant exploitée pour convertir la puissance hydraulique développée par la servocommande en puissance mécanique de manoeuvre des pales.

Dans le cas d'une servocommande comprenant un vérin hydraulique à multiple corps de vérin, les corps de vérin sont par exemple placés en tandem en étant intégrés en un corps de vérin commun et en logeant une tige commune. Par exemple encore, les corps de vérin d'un vérin hydraulique à multiple corps de vérin peuvent être placés en parallèle en logeant chacun des tiges respectives mécaniquement liées entre elles.

Le ou les corps de vérin sont à double-effet et sont individuellement alimentés en fluide par un circuit hydraulique propre acheminant en aller-retour le fluide sous pression entre le corps de vérin et la source de fluide. Au retour du fluide vers la source de fluide, le circuit est potentiellement mis à l'air libre.

La tige est agencée en piston et est montée en mobilité axiale bidirectionnelle à l'intérieur d'un corps de vérin qui la reçoit. Le corps de vérin comporte à sa tête et à son fond des passages de circulation du fluide. Un déplacement relatif entre la tige et le corps de vérin qui la reçoit est provoqué suivant l'un ou l'autre des sens de mobilité de la tige, selon une admission du fluide dans le corps de vérin à travers le passage de tête ou le passage de fond dont il est doté.

Selon des modalités d'implantation de la servocommande à bord de l'aéronef, la tige peut être fixée sur une structure du giravion pour manoeuvrer les pales par un déplacement du corps de vérin. Inversement selon une variante, le corps de vérin peut être fixé sur une structure du giravion pour manoeuvrer les pales par un déplacement de la tige.

Le fonctionnement du vérin hydraulique est placé sous la dépendance d'un ou de plusieurs distributeurs hydrauliques que comprend la servocommande. Chaque corps de vérin est individuellement alimenté en fluide sous pression par un distributeur hydraulique qui lui est affecté. De tels distributeurs hydrauliques sont notamment du type à tiroir ou peuvent être du type rotatif, et permettent de diriger le fluide acheminé sous pression à travers les circuits hydrauliques en faisant varier la puissance hydraulique développée par le vérin hydraulique.

Le ou les distributeurs hydrauliques sont individuellement placés sur les circuits hydrauliques en interposition entre la source de fluide et un corps de vérin qui leur est affecté, de sorte que l'alimentation en fluide sous pression d'un corps de vérin soit gérée par un distributeur hydraulique qui lui est propre.

Chaque distributeur hydraulique reçoit le fluide sous pression en provenance du circuit hydraulique sur lequel il est placé pour alimenter en fluide le corps de vérin qui lui est affecté, sélectivement à travers l'un ou l'autre des passages. Inversement, chaque distributeur hydraulique évacue le fluide qu'il reçoit en provenance du corps de vérin qui lui est affecté vers la source de fluide.

On pourra par exemple se reporter aux documents US 3 529 514 (MAYO MILLARD G. et al.), US 4 128 047 (CAERO J.G.) et FR 2 444 825 (MESSERSCHMITT BOELKOW BLOHM) qui décrivent de tels distributeurs hydrauliques couramment utilisés dans le domaine de l'aéronautique.

Plus particulièrement pour un distributeur hydraulique donné, un corps de distributeur du distributeur hydraulique comporte des premiers conduits pour mettre le distributeur hydraulique en communication fluidique avec la source de fluide. Un conduit d'admission est dédié à une admission dans le distributeur hydraulique du fluide sous pression en provenance de la source de fluide, un conduit d'évacuation étant dédié à une évacuation du fluide en provenance du corps de vérin hors du distributeur hydraulique vers la source de fluide.

Le corps de distributeur comporte aussi des deuxièmes conduits pour mettre le distributeur hydraulique en communication fluidique avec le corps de vérin par l'intermédiaire des passages dont il est doté. Un deuxième conduit est dédié à une mise en communication fluidique entre le distributeur hydraulique et le passage de tête, tandis qu'un autre deuxième conduit est dédié à une mise en communication fluidique entre le distributeur hydraulique et le passage de fond. Un tel distributeur hydraulique est typiquement un distributeur hydraulique à quatre voies et à N positions stables, N étant au moins égal à deux.

Le corps de distributeur loge par ailleurs en mobilité au moins un organe de distribution principal manoeuvrable par un organe de commande. Dans le cas où la servocommande comporte plusieurs distributeurs hydrauliques affectés à des corps de vérin respectifs, l'organe de commande est en prise conjointe sur l'un et l'autre des organes de distribution principaux des distributeurs hydrauliques, et est manoeuvrable selon les commandes de vol opérées par le pilote pour déplacer conjointement chacun des organes de distribution principaux.

L'organe de commande, tel qu'agencé en bielle, est par exemple manoeuvrable par ladite chaîne mécanique de transmission de puissance dans le cas d'une exploitation de commandes de vol manuelles. Par exemple encore, l'organe de commande est manoeuvrable par un dit actionneur, tel qu'un moteur électrique, dans le cas d'une exploitation de commandes de vol automatisées.

L'organe de distribution principal ménage des premiers canaux de circulation du fluide à travers le distributeur hydraulique entre les premiers conduits et les deuxièmes conduits.

Selon la position de l'organe de distribution principal manoeuvré par l'organe de commande, le conduit d'admission et le conduit d'évacuation sont mis en communication fluidique sélectivement avec l'un ou l'autre des deuxièmes conduits.

Il en ressort qu'une manoeuvre de l'organe de distribution principal provoquée par l'organe de commande selon les commandes de vol opérées par le pilote, permet de diriger et de faire varier la circulation du fluide à travers le corps de vérin auquel est affecté le distributeur hydraulique. Ainsi, le distributeur hydraulique permet de réguler le déplacement relatif entre le corps de vérin et la tige qu'il reçoit suivant l'un ou l'autre des sens de mobilité de la tige à l'intérieur du corps de vérin.

Dans ce contexte, il est notoirement considéré une situation normale de fonctionnement de la servocommande hors cas de panne du ou de l'un des distributeurs hydrauliques que comprend la servocommande. Un tel cas de panne est notamment constaté en cas de grippage de l'organe de distribution principal à l'intérieur du corps de distributeur de l'un des distributeurs hydrauliques.

Dans le cas d'une servocommande comprenant un vérin hydraulique à simple corps de vérin, un dysfonctionnement de la servocommande ou du circuit d'alimentation en fluide ne permet pas de manoeuvrer les pales au moyen de la servocommande. Le pilote peut néanmoins manoeuvrer les pales en forçant un déplacement de la tige au moyen de la chaîne mécanique de transmission de puissance. Il est cependant à relever qu'une telle manoeuvre forcée de la tige est inconfortable pour le pilote.

L'intégration de plusieurs corps de vérin au vérin hydraulique permet de sécuriser le fonctionnement de la servocommande, notamment en cas de dysfonctionnement de l'un des circuits hydrauliques alimentant en fluide l'un ou l'autre des corps de vérin ou encore en cas de dysfonctionnement de l'un des corps de vérin.

Il se pose donc le problème de la sécurisation, de la fiabilité et de la précision du fonctionnement des servocommandes. Plus particulièrement, un cas de grippage de l'organe de distribution principal du ou de l'un des distributeurs hydrauliques ne doit pas provoquer un blocage du vérin hydraulique ni son dysfonctionnement en autorisant un déplacement incontrôlé de la ou des tiges coopérant respectivement avec le ou les corps de vérin.

C'est pourquoi pour fiabiliser le fonctionnement des servocommandes, il est connu des distributeurs hydrauliques doubles. Un distributeur hydraulique double comporte un organe de distribution de secours monté dans le corps de distributeur, en interposition entre l'organe de distribution principal et le corps de distributeur. L'organe de distribution de secours comporte des deuxièmes canaux communiquant respectivement avec les premiers canaux de l'organe de distribution principal.

Plus particulièrement, l'organe de distribution principal est guidé en mobilité à l'intérieur de l'organe de distribution de secours, lui-même monté potentiellement mobile dans le corps de distributeur. En position nominale du distributeur hydraulique hors cas de grippage de l'organe de distribution principal, l'organe de distribution de secours est maintenu en une position prédéfinie à l'intérieur du corps de distributeur par des moyens de positionnement. De tels moyens de positionnement sont notamment du type à déformation élastique prenant des appuis antagonistes contre le corps de distributeur et contre l'organe de distribution de secours.

En cas de grippage de l'organe de distribution principal à l'intérieur de l'organe de distribution de secours, l'organe de distribution de secours est entraîné par friction par l'organe de distribution principal à l'encontre des efforts exercés par les moyens à déformation élastique contre l'organe de distribution de secours.

De telles dispositions permettent de maintenir en fonctionnement le distributeur hydraulique malgré un grippage de l'organe de distribution principal.

Cependant en cas de grippage de l'organe de distribution principal, le fonctionnement du distributeur hydraulique n'est obtenu que partiellement conforme aux commandes de vol opérées par le pilote.

Il apparaît que la fiabilisation obtenue du fonctionnement du distributeur hydraulique mérite d'être améliorée. En effet, l'agencement susvisé du distributeur hydraulique permet essentiellement d'éviter un blocage du vérin hydraulique en cas de grippage de l'organe de distribution principal du ou de l'un des distributeurs hydrauliques que comprend la servocommande.

Dans le cas d'un vérin hydraulique à multiple corps de vérin, une commande correcte du fonctionnement du vérin hydraulique est autorisée par l'un des distributeurs hydrauliques en cas de grippage de l'organe de distribution principal de l'autre distributeur hydraulique. Eventuellement, une commande correcte peut être obtenue par le distributeur hydraulique défaillant dans le cas où l'organe de distribution principal suite à son grippage est en position adéquate à l'intérieur de l'organe de distribution de secours, ce qui est cependant aléatoire.

Il en ressort qu'il est souhaitable qu'un grippage de l'organe de distribution principal de l'un des distributeurs hydrauliques ne fasse en aucun cas obstacle au fonctionnement correct de l'autre distributeur hydraulique, pour procurer un fonctionnement optimisé du vérin hydraulique en cas de dysfonctionnement de l'un des distributeurs hydrauliques.

Par ailleurs, l'utilisation de moyens de positionnement du type à déformation élastique maintenant l'organe de distribution de secours à l'intérieur du corps de distributeur dans ladite position prédéfinie est à améliorer.

En effet, il est souhaitable que la manoeuvre du distributeur hydraulique puisse être effectuée avec des efforts réduits en cas de grippage de l'organe de distribution principal, pour optimiser le confort du pilote humain générant des commandes de vol manuelles et pour éviter un surdimensionnement dudit actionneur dans le cas d'une exploitation de commandes de vol automatisées.

Pour connaître un environnement technologique proche de la présente invention, on pourra se reporter au document FR2916492 (EUROCOPTER FRANCE) qui décrit un dispositif de détection du grippage d'un distributeur hydraulique double d'une servocommande à vérin hydraulique à double corps de vérin double-effet de manoeuvre des pales d'un rotor de giravion.

Le but de la présente invention est de proposer un distributeur hydraulique double d'une servocommande de manoeuvre des pales d'un rotor de giravion modifiant leur incidence par variation de leur pas collectivement ou cycliquement, ainsi qu'un procédé de mise en oeuvre dudit distributeur hydraulique.

Une telle servocommande comprend un vérin hydraulique à au moins un corps de vérin double-effet, le ou les corps de vérin étant chacun alimentés en fluide à travers un distributeur hydraulique qui leur est individuellement affecté tel qu'il vient d'être décrit.

Dans le contexte d'un agencement d'une telle servocommande, la présente invention vise essentiellement à répondre aux besoins révélés et résultats inhabituels suivants, considérés isolément ou en combinaison :
- ) interdire un dysfonctionnement du vérin hydraulique en cas de grippage de l'organe de distribution principal de l'un des distributeurs hydrauliques équipant un vérin hydraulique à multiple corps de vérin de la servocommande.
-) stabiliser la position relative entre l'organe de distribution de secours et l'organe de distribution principal d'un distributeur hydraulique équipant un vérin hydraulique de la servocommande, ledit vérin hydraulique étant indifféremment à simple corps de vérin ou à multiple corps de vérin,
-) autoriser, en cas de grippage de l'organe de distribution principal de l'un des distributeurs hydrauliques équipant un vérin hydraulique à multiple corps de vérin de la servocommande, un fonctionnement totalement libre d'au moins un autre distributeur hydraulique affecté à un autre corps de vérin du vérin hydraulique.
-) obtenir un fonctionnement fiable et précis du ou des distributeurs hydrauliques équipant un vérin hydraulique indifféremment à simple corps de vérin ou à multiple corps de vérin, tout en limitant les efforts à fournir par un organe de commande régulant leur fonctionnement conformément à des commandes de vol générées par un pilote du giravion,
-) permettre à un pilote de manoeuvrer les pales confortablement au moyen d'organes de commande manuelle en cas de grippage de l'organe de distribution principal du distributeur hydraulique équipant un vérin hydraulique simple corps de vérin.

Par ailleurs, il ne doit pas être perdu de vue que la structure du ou des distributeurs hydrauliques doit être la plus simple et la plus légère possible. Une telle contrainte s'inscrit dans la recherche d'une obtention du ou des distributeurs hydrauliques à moindres coûts et d'une limitation de leur masse et de leur encombrement, compte tenu de leur implantation à bord d'un giravion souhaité le plus léger possible.

Le distributeur hydraulique de la présente invention est un distributeur hydraulique double que comprend une servocommande de manoeuvre des pales d'un rotor de giravion.

Le distributeur hydraulique de la présente invention comprend un premier corps, dit corps de distributeur, comportant des premiers conduits, dits conduits A. Les conduits A sont dédiés à une jonction hydraulique entre le distributeur hydraulique et une source de fluide sous pression. Les conduits A comprennent au moins un conduit d'admission, dit conduit A d'admission, le conduit A d'admission procurant une admission du fluide depuis l'extérieur vers l'intérieur du distributeur hydraulique. Les conduits A comprennent aussi au moins un conduit d'évacuation, dit conduit A d'évacuation. Le conduit A d'évacuation procure une évacuation du fluide hors du distributeur hydraulique.

Le corps de distributeur comporte aussi des deuxièmes conduits, dits conduits B. Les conduits B sont dédiés à une jonction hydraulique entre le distributeur hydraulique et un deuxième corps, dit corps de vérin, d'un vérin hydraulique de la servocommande. Les conduits B comprennent un couple de conduits B procurant une circulation du fluide entre l'intérieur et l'extérieur du distributeur hydraulique.

Le distributeur hydraulique de la présente invention comprend aussi un organe de distribution principal monté mobile à l'intérieur du corps de distributeur. L'organe de distribution principal est manoeuvrable par un organe de commande et ménage des premiers canaux, dits canaux A, dédiés à une circulation du fluide à travers le distributeur hydraulique entre les conduits A et les conduits B. Le conduit A d'admission et le conduit A d'évacuation sont en communication fluidique par l'intermédiaire des canaux A sélectivement avec l'un ou l'autre des conduits B selon des positions respectives de l'organe de distribution principal à l'intérieur du corps de distributeur.

Le distributeur hydraulique de la présente invention comprend encore un organe de distribution de secours interposé entre le corps de distributeur et l'organe de distribution principal. L'organe de distribution de secours loge en mobilité l'organe de distribution principal et est monté mobile à l'intérieur du corps de distributeur. L'organe de distribution de secours ménage des deuxièmes canaux, dits canaux B. Les canaux B sont dédiés à une circulation du fluide entre d'une part les canaux A et d'autre part les conduits A et les conduits B sélectivement selon lesdites positions respectives de l'organe de distribution principal.

Le distributeur hydraulique de la présente invention comprend par ailleurs des moyens de positionnement de l'organe de distribution de secours dans une position prédéfinie à l'intérieur du corps de distributeur. Dans ladite position prédéfinie de l'organe de distribution de secours, les canaux A et les canaux B sont en communication fluidique deux à deux.

Lesdits moyens de positionnement mettent en oeuvre au moins des moyens à déformation élastique prenant appui contre le corps de distributeur. Une mobilité de l'organe de distribution de secours à l'intérieur du corps de distributeur conjointement avec l'organe de distribution principal est autorisée sous l'effet d'un entraînement par friction de l'organe de distribution de secours par l'organe de distribution principal en situation de grippage à l'intérieur de l'organe de distribution de secours, à l'encontre d'une poussée exercée par les moyens à déformation élastique.

Selon la présente invention, lesdits moyens de positionnement sont des moyens de blocage de l'organe de distribution de secours sur le corps de distributeur par une broche montée mobile sur le corps de distributeur. La broche coopère par emboîtement en appui glissant avec une cavité de l'organe de distribution de secours et est montée mobile entre une position d'engagement et une position de dégagement.

En position d'engagement, une tête de la broche est logée dans la cavité sous l'effet de la poussée exercée contre la broche par les moyens à déformation élastique. En position de dégagement ladite tête de la broche est dégagée totalement hors de la cavité par des moyens de manoeuvre de la broche à l'encontre de la poussée exercée contre la broche par les moyens à déformation élastique.

La mise en oeuvre des moyens de manoeuvre est placée sous la dépendance d'une mobilité relative entre l'organe de distribution de secours et le corps de distributeur autorisant une libération au moins partielle de ladite cavité par glissement de la tête de la broche à l'intérieur de la cavité.

En situation normale de fonctionnement du distributeur hydraulique, l'organe de distribution de secours est maintenu fermement bloqué dans ladite position prédéfinie par la broche dont la tête est logée dans la cavité. Ladite situation normale est une situation du distributeur hydraulique selon laquelle il est constaté une absence de grippage de l'organe de distribution principal à l'intérieur de l'organe de distribution de secours.

En position d'engagement de la broche, l'organe de distribution principal est mobile à l'intérieur de l'organe de distribution de secours, en étant déplaçable par l'organe de commande. L'organe de distribution de secours est fermement bloqué à l'intérieur du corps de distributeur en position d'engagement de la broche maintenue engagée dans ladite cavité par les moyens à déformation élastique qui exercent une poussée axiale sur la broche.

Il est compris que ladite poussée axiale est exercée sur la broche par les moyens à déformation élastique suivant la direction générale d'extension axiale de la broche correspondante à la direction de mobilité de la broche à l'intérieur du distributeur hydraulique.

Il est aussi compris que la liaison mécanique par brochage entre l'organe de distribution de secours et le corps de distributeur implique que la poussée axiale exercée sur la broche par les moyens à déformation élastique est opérée transversalement à l'axe de mobilité des organes de distribution à l'intérieur du corps, sans préjuger du caractère tournant ou translatif de cette mobilité.

En situation de grippage de l'organe de distribution principal à l'intérieur de l'organe de distribution de secours, un déplacement relatif entre le corps de distributeur et l'organe de distribution de secours est autorisé par glissement relatif entre la tête de la broche et la cavité à l'encontre de la poussée exercée sur la broche par les moyens à déformation élastique.

Plus particulièrement, un déplacement de l'organe de distribution de secours est provoqué par son entraînement par friction par l'organe de distribution principal en situation de grippage. Un déplacement de l'organe de secours aussi faible soit-il provoque par réaction de l'appui de la tête de la broche contre les parois de la cavité un amorçage d'un déplacement de la broche en position de dégagement. Un tel amorçage du déplacement de la broche est limité en débattement et est provoqué sous l'effet d'un glissement de la tête de la broche contre la paroi de la cavité.

Le mouvement relatif entre la tête de la broche et la cavité provoque un déplacement de la broche depuis la position d'engagement vers une position intermédiaire de la broche. Le mouvement relatif entre la tête de la broche et la cavité, même limité en course à un amorçage de faible amplitude d'un mouvement de la broche, autorise ladite mobilité relative entre l'organe de distribution de secours et le corps de distributeur provoquant la mise en oeuvre des moyens de manoeuvre et le passage de la broche depuis la position d'engagement, et plus spécifiquement depuis la position intermédiaire, vers la position de dégagement.

Le passage de la broche en position de dégagement est indépendant de l'amplitude du mouvement relatif entre l'organe de distribution principal et l'organe de distribution de secours. Le maintien de la broche en position intermédiaire est d'une durée brève en raison de la mise en oeuvre des moyens de manoeuvre dès un amorçage du déplacement relatif entre l'organe de distribution principal et l'organe de distribution de secours.

La mise en oeuvre des moyens de manoeuvre retire totalement la tête de la broche hors de la cavité, libérant l'organe de distribution de secours de son blocage à l'intérieur du corps de distributeur. En situation totalement libre en mouvement, le distributeur de secours n'est soumis à aucune contrainte s'opposant à son déplacement à l'intérieur du corps de distributeur, exception faite des efforts de frottement entre l'organe de distribution de secours et le corps de distributeur.

Il est à relever à ce stade de la description que la mise en oeuvre des moyens de manoeuvre est potentiellement provoquée par un ordre de commande généré par des moyens de détection de l'amorçage du déplacement relatif entre l'organe de distribution de secours et le corps de distributeur.

Poursuivant la démarche de la présente invention, il est avantageusement proposé d'exploiter le fluide admis à l'intérieur du distributeur hydraulique pour procurer les moyens de puissance mécanique nécessaire à la manoeuvre de la broche depuis sa position d'engagement vers sa position de dégagement

Il est à cet effet proposé une forme avantageuse de réalisation selon laquelle les moyens de manoeuvre de la broche sont des moyens de poussée fluidique de la broche munie d'un piston contre lequel est appliqué le fluide admis sous pression à l'intérieur du distributeur hydraulique.

Plus particulièrement, la broche est logée en mobilité dans une chambre du corps de distributeur et est agencée en pointeau d'obturation d'un premier passage de fluide, dit canal C. Ledit canal C découche sur la chambre à travers la cavité et est en communication fluidique avec l'un quelconque desdits conduits A et conduits B. Un dégagement au moins partiel de la cavité autorisant une admission à l'intérieur de la chambre du fluide en provenance du canal C.

La libération au moins partielle de la cavité par la tête de la broche génère la mise en oeuvre des moyens de manoeuvre par poussée de la broche vers la position de dégagement au moyen du fluide circulant sous pression à l'intérieur du distributeur.

En cas de grippage de l'organe de distribution principal et en conséquence de l'amorçage du déplacement de la broche, le fluide admis à l'intérieur de la chambre à travers la cavité libérée au moins partiellement de la tête, repousse la tête et provoque le passage de la broche depuis la position d'engagement partiel de la tête à l'intérieur de la cavité en position intermédiaire de la broche vers la position de dégagement de la broche totalement libérée de l'emprise exercée par la cavité.

L'admission du fluide à l'intérieur de la chambre rend irréversible le passage de la broche depuis la position de dégagement vers la position d'engagement.

Il est évidemment compris que la capacité de poussée des moyens à déformation élastique contre la broche est choisie inférieure à la capacité de déplacement de la broche par les moyens de manoeuvre, et plus spécifiquement à la capacité de poussée de la broche par le fluide admis sous pression à l'intérieur de la chambre en provenance du canal C.

Il est aussi compris à ce stade de la description que l'acheminement du fluide vers la broche est potentiellement réalisé à partir d'un quelconque point de prélèvement du fluide depuis l'un quelconque des conduits A et des conduits B pour l'acheminer vers la chambre.

Cependant, le canal C est de préférence en communication fluidique avec le conduit A d'admission pour optimiser l'effort de poussée exercé sur la broche par le fluide acheminé sous pression depuis la source de fluide.

Selon une forme avantageuse de réalisation, le distributeur hydraulique comporte des moyens de mise en communication fluidique entre eux de l'ensemble des conduits A et des conduits B en position de dégagement de la broche.

La mise en communication fluidique entre les conduits A et les conduits B place la chambre spontanément et hors toute autre intervention extérieure à une pression de fluide correspondante à la pression du fluide évacuée hors du distributeur hydraulique à travers le conduit d'évacuation.

Dans le cadre d'une intégration du distributeur à ladite servocommande pour réguler la circulation du fluide dans un corps de vérin du vérin hydraulique, le fluide circulant dans ce corps de vérin est à une pression identique en tête et en fond de vérin. Une telle pression correspond à la pression du fluide évacué hors du distributeur hydraulique vers une source de fluide mise à une pression inférieure à la pression du fluide admis vers le distributeur hydraulique depuis la source de fluide, tel que notamment par mise à l'air ambiant du conduit A d'évacuation à la source de fluide, voire par évacuation du fluide vers la source de fluide à une pression significativement inférieure à la pression du fluide acheminé depuis la source de fluide vers le distributeur hydraulique.

Selon une forme particulière de réalisation, le corps de distributeur comporte des deuxièmes passages de fluide, dits canaux D. Lesdits canaux D sont des passages de fluide respectivement pour un premier canal D entre la chambre et le conduit A d'admission, pour un deuxième canal D entre la chambre et le conduit A d'évacuation, pour un troisième canal D entre la chambre et l'un quelconque des conduits B et pour un quatrième canal D entre la chambre et l'autre canal B. Les débouchés sur la chambre des canaux D sont conjointement obturés par le piston en position d'engagement de la broche et sont dégagés du piston en position de dégagement de la broche.

Le dégagement des débouchés sur la chambre des canaux D est potentiellement réalisé conjointement ou progressivement de l'un à l'autre desdits conduits, considérés individuellement ou considérés deux à deux par groupe de conduits respectivement formés par les conduits A et les conduits B.

Par exemple selon une forme de réalisation, les canaux D débouchent sur la chambre dans un même plan radial considéré par rapport à la direction axiale de déplacement de la broche à l'intérieur de la chambre. Ces dispositions sont telles que la mise en communication fluidique entre eux des conduits A et des conduits B est effectuée simultanément.

Par exemple encore et selon une autre forme de réalisation, les canaux D débouchent sur la chambre dans différents plans radiaux par rapport la direction axiale de déplacement de la broche à l'intérieur de la chambre. Ces dispositions sont telles que la mise en communication fluidique entre eux des conduits A et des conduits B est effectuée progressivement selon la position axiale de la broche au fur et à mesure de son déplacement vers la position de dégagement.

La chambre est de préférence en communication fluidique avec le conduit A d'évacuation par l'intermédiaire d'un troisième passage de fluide, dit canal E, qui débouche dans une quelconque position de la broche en amont du piston dans le sens de déplacement de la broche depuis la position d'engagement vers la position de dégagement. La chambre est alimentée en permanence en fluide depuis le conduit A d'évacuation en position d'engagement de la broche. Ces dispositions permettent d'éviter une variation excessive de la pression régnant à l'intérieur de la chambre lors de l'admission du fluide dans la chambre en provenance du conduit A d'admission.

Dans le cadre d'une intégration du distributeur à ladite servocommande pour réguler la circulation du fluide dans un corps de vérin d'un vérin hydraulique que comprend ladite servocommande, le fluide admis dans la chambre en position d'engagement de la broche est à une pression correspondante à la pression du fluide évacué hors du distributeur hydraulique vers une source de fluide mise à l'air ambiant ou tout au moins placée à une pression inférieure à la pression du fluide admis vers le distributeur hydraulique depuis la source de fluide.

Il en ressort que la pression du fluide à l'intérieur de la chambre en position d'engagement de la broche ne saurait interdire la poussée exercée contre la broche par le fluide admis dans la chambre depuis le conduit d'admission.

On relèvera par ailleurs que ladite alimentation permanente en fluide de la chambre en position d'engagement de la broche fournie une lubrification à l'intérieur de la chambre favorable au déplacement du piston, ce qui permet d'éviter un grippage de la broche à l'intérieur de la chambre.

Le canal E comporte de préférence une restriction de section, pour autoriser une éventuelle échappée du fluide admis inopinément à l'intérieur de la chambre en cas d'une faible fuite de fluide entre la tête et la cavité formant le débouché du canal C.

Le distributeur hydraulique comporte de préférence des moyens de maintien de la broche en position de dégagement indépendamment d'une rupture de la mise en oeuvre des moyens de manoeuvre. De telles dispositions sont particulièrement utiles dans le cas où il est souhaité de placer la chambre à une pression équivalente à la pression du fluide évacué vers la source de fluide.

Plus particulièrement, les moyens de maintien dispensent d'avoir à conserver un maintien actif les moyens de manoeuvre pour maintenir la broche en position de dégagement. La broche étant déplacée par les moyens de manoeuvre depuis la position d'engagement vers la position de dégagement, les moyens de maintien sont mis en oeuvre, de préférence spontanément, pour interdire en eux-mêmes un passage inopiné de la broche depuis la position de dégagement vers la position d'engagement.

De telles dispositions sont particulièrement utiles dans le cas souhaité où les conduits A et les conduits B sont mis en communication fluidique en position de dégagement de la broche, et en conséquence dans le cas préféré où la chambre est placée à la pression du fluide régnant dans le conduit d'évacuation. En effet, la mise en communication fluidique des conduits A et des conduits B provoquant une chute de pression à l'intérieur de la chambre, il est préféré de conforter le maintien de la broche en position de dégagement par des moyens de maintien spécifiques.

Selon une forme avantageuse de réalisation permettant de simplifier la structure du distributeur, les moyens de maintien sont formés par lesdits moyens à déformation élastique agencés en un ressort à au moins une lamelle.

Ledit ressort à lamelle(s) est fixé au corps de distributeur et est en prise axiale bidirectionnelle sur la broche. La notion de bidirectionnelle est à considérer suivant les deux sens de mobilité axiale de la broche. Le ressort à lamelle(s) exerce une poussée axiale contre la broche en position d'engagement et une traction axiale sur la broche en position de dégagement en conséquence de sa déformation provoquée par le passage de la broche en position de dégagement.

Selon une autre forme de réalisation des moyens de maintien, ceux-ci sont du type à emboîtement élastique et comprennent une agrafe élastiquement déformable coopérant avec un logement. L'agrafe et le logement sont respectivement ménagés indifféremment sur le corps de distributeur et sur la broche.

Il est évidemment compris que l'agrafe et le logement sont respectivement ménagés sur le corps de distributeur et sur la broche, sans préjuger de l'affectation faite de l'agrafe et du logement au corps de distributeur ou à la broche.

Selon une forme de réalisation, le distributeur hydraulique est du type à tiroir. Dans ce cas l'organe de distribution principal et l'organe de distribution de secours sont montés mobiles en translation à l'intérieur du corps de distributeur.

Selon une autre forme de réalisation, le distributeur hydraulique est du type rotatif. Dans ce cas l'organe de distribution principal et l'organe de distribution de secours sont montés mobiles en débattement angulaire à l'intérieur du corps de distributeur.

La surface de portée de la tête de la broche à l'intérieur de la cavité est indifféremment une surface à portée sphérique ou une surface à portée conique.

Plus particulièrement, la surface de portée de la tête de la broche est potentiellement de conformation quelconque, dès lors que ladite quelconque conformation favorise le passage par glissement de la broche depuis la position d'engagement vers la position intermédiaire dans laquelle la tête est partiellement dégagée hors de la cavité sous l'effet du déplacement relatif entre l'organe de distribution de secours et l'organe de distribution principal.

Selon une forme particulière de réalisation, la mise en oeuvre des moyens de manoeuvre est placée sous la dépendance de moyens de détection d'un déplacement relatif entre l'organe de distribution principal et l'organe de distribution de secours. De tels moyens de détection sont par exemple décrits par le document FR2916492.

Dans le cadre d'une intégration du distributeur à ladite servocommande pour réguler la circulation du fluide dans un corps de vérin d'un vérin hydraulique que comprend la servocommande, le distributeur hydraulique est potentiellement équipé de tels moyens de détection générateurs d'un signal d'alarme. De tels moyens de détection peuvent être avantageusement mis à profit pour générer un ordre de commande de la mise en oeuvre des moyens de manoeuvre.

De telles dispositions permettent notamment de choisir les moyens de manoeuvre parmi des moyens de manoeuvre de types divers. Plus particulièrement, les moyens de manoeuvre peuvent être par exemple du type électromagnétique, mécanique, pneumatique ou chimique.

La présente invention a aussi pour objet une servocommande de manoeuvre des pales d'un rotor de giravion. Ladite servocommande comprend au moins un vérin hydraulique à au moins un corps de vérin double-effet et au moins un distributeur hydraulique de la présente invention tel qu'il vient d'être décrit.

Selon une forme spécifique de réalisation, la servocommande comprend au moins un vérin hydraulique à plusieurs corps de vérin double-effet, chacun des corps de vérin étant alimenté en fluide par un distributeur hydraulique qui lui est affecté.

Selon un exemple de réalisation d'une servocommande de la présente invention comprenant au moins un vérin hydraulique à double corps de vérin double-effet, chacun des corps de vérin est en communication fluidique avec un distributeur hydraulique qui lui est affecté. Les conduits B de chacun des distributeurs hydrauliques sont en communication fluidique avec un corps de vérin respectif.

L'un quelconque des conduits B d'un premier distributeur hydraulique est en communication fluidique avec un premier passage de tête d'un premier corps de vérin. L'autre des conduits B du premier distributeur hydraulique est en communication fluidique avec un premier passage de fond du premier corps de vérin.

L'un quelconque des conduits B d'un deuxième distributeur hydraulique est en communication fluidique avec un deuxième passage de tête d'un deuxième corps de vérin. L'autre des conduits B du deuxième distributeur est en communication fluidique avec un deuxième passage de fond du deuxième corps de vérin.

Les organes de distribution principaux de chacun des distributeurs hydraulique sont conjointement en prise sur un organe de manoeuvre commun dont la mise en oeuvre régule la distribution du fluide à travers l'un et l'autre des deux distributeurs hydrauliques.

En position d'engagement des broches de chacun des distributeurs hydrauliques, le premier corps de vérin et le deuxième corps de vérin sont alimentés en fluide en concordance par les distributeurs hydrauliques qui leurs sont respectivement affectés. Les distributeurs hydrauliques régulent la circulation du fluide à l'intérieur des corps de vérin selon la manoeuvre conjointe des organes de distribution principaux par l'organe de manoeuvre commun. Les distributeurs hydrauliques provoquent un déplacement relatif entre les corps de vérin et au moins une tige qu'ils logent indifféremment conjointement ou individuellement, respectivement selon le sens de circulation du fluide distribué par les distributeurs hydrauliques à l'intérieur des corps de vérin.

Il est compris que tel que mentionné plus loin, qu'une même tige peut être logée conjointement par les corps de vérin dans le cas d'un montage des corps de vérin en tandem ou que des tiges en pluralité peuvent être logées dans des corps de vérin respectifs dans le cas d'un montage des corps de vérin en parallèle.

Un grippage de l'un quelconque des organes principaux des distributeurs hydrauliques provoque un déplacement de la broche du distributeur hydraulique dont l'organe de distribution principal est grippé. Le déplacement de la broche libère totalement en mobilité l'organe de distribution de secours en autorisant de préférence une circulation du fluide entre les conduits A et les conduits B.

Un grippage de l'un quelconque des organes principaux des distributeurs hydrauliques provoque une inhibition de la distribution sélective en fluide vers le corps de vérin par un distributeur hydraulique dont l'organe de distribution principal est grippé. Ladite inhibition ne fait pas obstacle au libre déplacement de l'organe de distribution de secours à l'intérieur du corps de distributeur, et en conséquence ne fait pas obstacle au déplacement de l'organe de distribution principal par l'organe de manoeuvre.

Un grippage de l'organe de distribution principal d'un premier distributeur hydraulique ne fait pas obstacle à la libre manoeuvre de l'organe principal du deuxième distributeur hydraulique par l'organe de manoeuvre, et ne fait pas obstacle à une libre mobilité relative entre la ou les tiges et les corps de vérin.

Le déplacement relatif entre la ou les tiges et les corps de vérin est maintenu régulé par l'autre distributeur hydraulique fournissant une distribution sélective du fluide à l'intérieur du corps de vérin qui lui est affecté.

Selon une forme de réalisation, les corps de vérin sont montés en tandem en logeant conjointement une tige commune.

Selon une autre forme de réalisation, les corps de vérin sont montés en parallèle, les corps de vérin logeant des tiges respectives mécaniquement liées entre elles.

Des exemples de réalisation de la présente invention vont être décrits en relation avec les figures des planches annexées, dans lesquelles :
- la fig.1 est une illustration d'une servocommande de manoeuvre des pales d'un rotor de giravion intégrant un distributeur hydraulique conforme à la présente invention.
- les fig.2 à fig.4 sont des illustrations de formes respectives de réalisation d'une servocommande intégrant au moins un distributeur hydraulique conforme à la présente invention.
- les fig.5 à fig.8 sont des schémas illustrant successivement des modalités de fonctionnement d'un distributeur hydraulique que comprennent les diverses servocommandes représentées sur les fig.2 à fig.4.
- les fig.9 et fig.10 sont des variantes respectives de réalisation d'un distributeur hydraulique conforme à la présente invention.

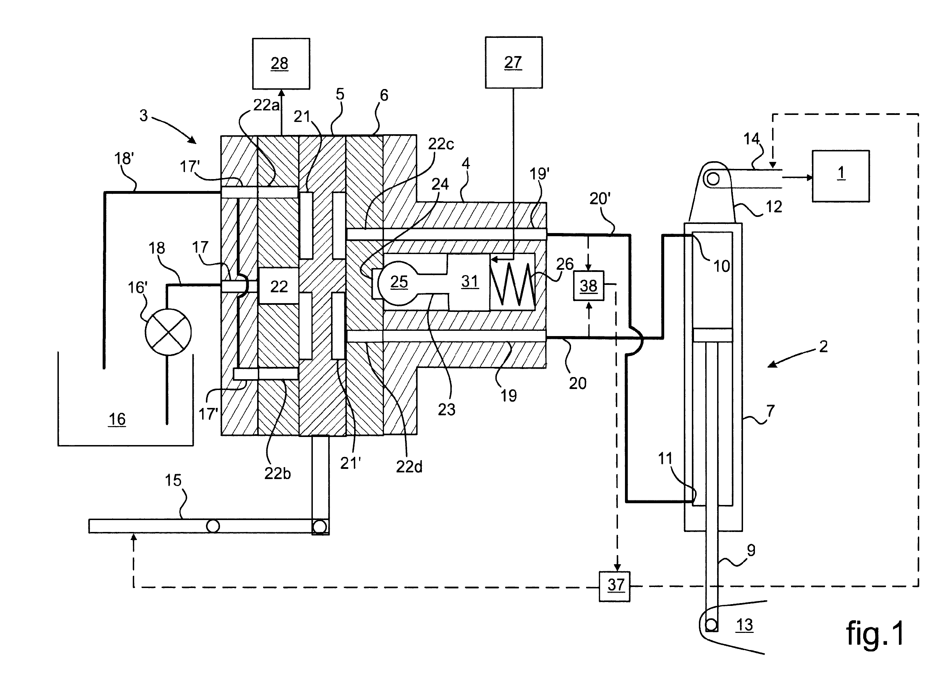

Sur les fig.1 à fig.4, une servocommande est agencée pour manoeuvrer les pales 1 d'un rotor principal à axe sensiblement vertical d'un giravion.

La servocommande associe classiquement au moins un vérin hydraulique 2 dont la mise en oeuvre est régulée par au moins un distributeur hydraulique 3,3' comportant un corps de distributeur 4 logeant un organe de distribution principal 5 et un organe de distribution de secours 6.

Le vérin hydraulique 2 comporte au moins un corps de vérin 7,8 logeant une tige 9 en mobilité axiale suivant la direction générale d'extension du corps de vérin 7,8. Le ou les corps de vérin 7,8 sont à double effet et comportent à cet effet un passage de tête 10 et un passage de fond 11 pour autoriser une circulation d'un fluide à l'intérieur du ou des corps de vérin 7,8.

Le fluide est acheminé sous pression vers le ou les corps de vérin 7,8 et est potentiellement admis dans le ou les corps de vérin 7,8 indifféremment à travers le passage de tête 10 ou à travers le passage de fond 11. Inversement, le fluide est évacué hors du ou des corps de vérin 7,8 à travers le passage de fond 11 ou à travers le passage de tête 10.

La circulation du fluide à l'intérieur du ou des corps de vérin 7,8 provoque une mobilité relative entre le ou les corps de vérin 7,8 et la tige 9 qui est montée coulissante à l'intérieur d'au moins un corps de vérin 7,8 suivant deux directions opposées de mobilité. La mobilité relative entre le ou les corps de vérin 7,8 et la tige 9 est exploitée pour manoeuvrer les pales 1.

A cet effet, le ou les corps de vérin 7,8 et la ou les tiges 9 du ou des vérins hydrauliques 2 sont chacun munis d'un organe d'attache 12,13 pour leur mise en prises respectives sur un châssis du giravion et/ou sur un organe de manoeuvre 14 des pales 1.

Sur les fig.1 à fig.3, la tige 9 est équipée d'un organe d'attache 13 au châssis du giravion et le corps de vérin 7 est équipé d'un organe d'attache 12 à l'organe de manoeuvre 14 des pales 1.

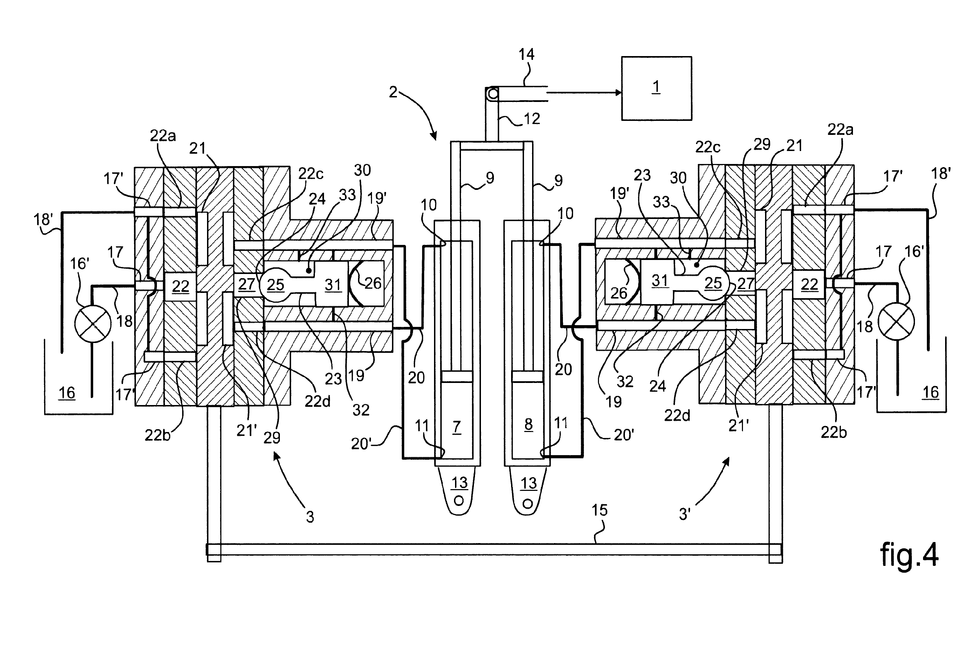

Sur la fig.4, des tiges 9 coopérant avec des corps de vérin 7,8 respectifs sont conjointement équipées d'un organe commun d'attache 13 à l'organe de manoeuvre 14 des pales 1. Les corps de vérins 7,8 sont quant à eux chacun équipés d'un organe d'attache 12 au châssis du giravion.

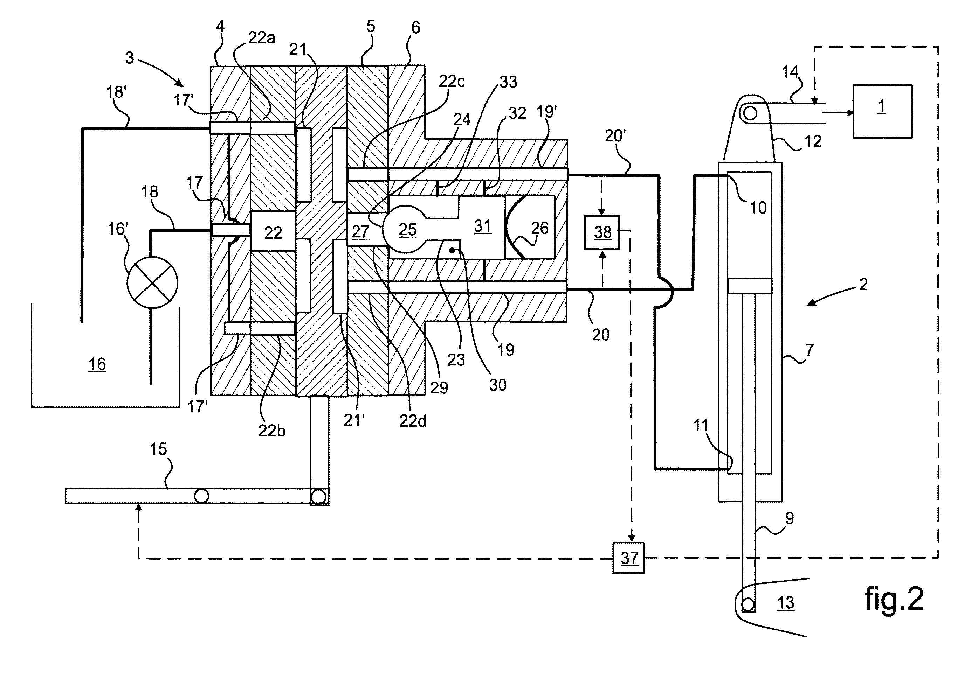

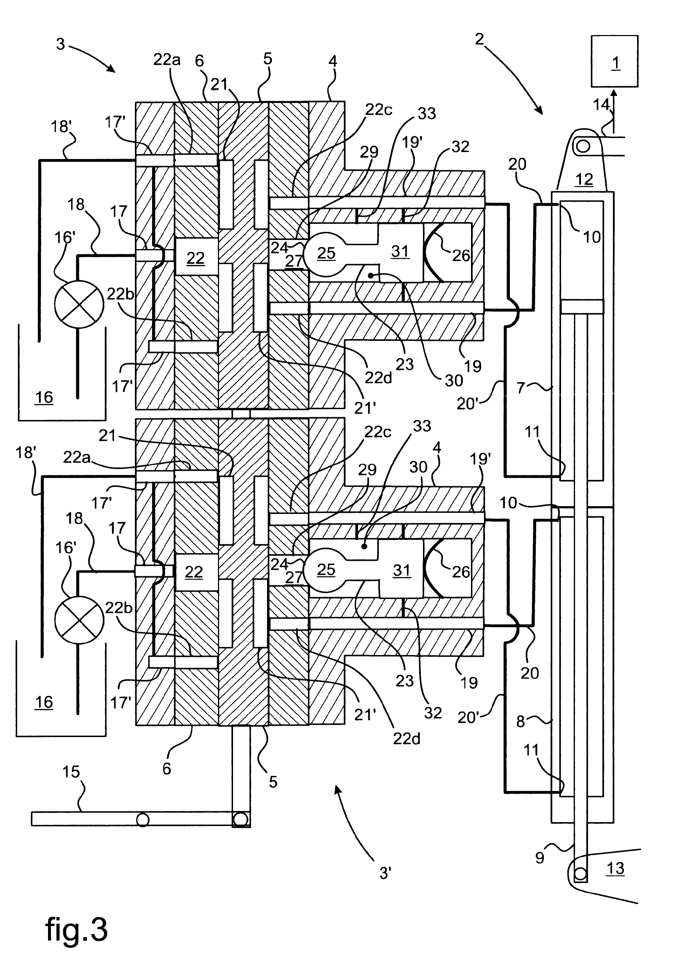

Par ailleurs sur les fig.1 et fig.2, la servocommande comprend un vérin hydraulique 2 comportant un corps de vérin 7 unique. Sur la fig.3, la servocommande comprend un vérin hydraulique 2 comportant deux corps de vérin 7,8 montés en tandem et logeant une tige 9 commune. Sur la fig.4, la servocommande comprend un vérin hydraulique 2 comportant deux corps de vérin 7,8 placés en parallèle, dont les tiges 9 respectives sont conjointement manoeuvrées en étant liées l'une à l'autre au moyen de l'organe commun d'attache 12 dont elles sont équipées.

D'une manière générale sur les fig.1 à fig.4, la régulation de la circulation du fluide à travers au moins un corps de vérin 7,8 est placée sous la dépendance d'un distributeur hydraulique 3,3' qui lui est affecté.

La commande du fonctionnement d'au moins un distributeur hydraulique 3,3' est placée sous la dépendance d'un organe de commande 15 manoeuvrable par un pilote du giravion, indifféremment pilote humain ou pilote automatique. L'organe de commande 15 est en prise sur l'organe de distribution principal 5 d'au moins un distributeur hydraulique 3,3' pour réguler la circulation du fluide entre ledit au moins un corps de vérin 7,8 et une source de fluide 16.

Le corps de distributeur 4 d'un distributeur hydraulique 3,3' de l'invention comporte des conduits A 17,17' dédiés à la jonction hydraulique entre le distributeur hydraulique 3,3' et la source de fluide 16. Une conduite, dite conduite A aller 18, achemine par l'intermédiaire d'une pompe 16' le fluide sous pression depuis la source de fluide 16 vers un conduit A d'admission 17 du distributeur hydraulique 3,3'. Une autre conduite, dite conduite A retour 18', achemine le fluide sous pression depuis des conduits A d'évacuation 17' du distributeur hydraulique 3,3' vers la source de fluide 16.

Le corps de distributeur 4 d'un distributeur hydraulique 3,3' de l'invention comporte aussi des conduits B 19,19' dédiés à une jonction hydraulique entre le distributeur hydraulique 3,3' et un corps de vérin 7,8 auquel il est affecté. Les conduits B sont en communication hydraulique par l'intermédiaire de conduites 20,20', dites conduites B, respectivement avec le passage de tête 10 et le passage de fond 11 du corps de vérin 7,8 auquel le distributeur hydraulique 3,3' est affecté.

Il est subsidiairement repéré une première conduite B, dite conduite B de tête 20 et une deuxième conduite B, dite conduite B de fond 20', la conduites B de tête 20 et ladite conduite B de fond 20' étant en communication fluidique respectivement avec le passage de tête 10 et le passage de fond 11 du corps de vérin 7,8 auquel les conduites B sont affectées.

L'organe de distribution principal 5 d'un distributeur hydraulique 3,3' est monté coulissant à l'intérieur de l'organe de distribution de secours 6, lui-même monté coulissant dans le corps de distributeur 4.

En cas de grippage de l'organe de distribution principal 5 à l'intérieur de l'organe de distribution de secours 6, l'organe de distribution principal 5 entraîne par friction l'organe de distribution de secours 6 qui coulisse à l'intérieur du corps de distributeur 4 pour maintenir en fonctionnement le distributeur hydraulique 3,3'.

L'organe de distribution principal 5 comporte des premiers canaux 21,21' dits canaux A, dédiés à une circulation du fluide à travers le distributeur hydraulique 3,3' entre les conduits A 17,17' et les conduits B 19,19'.

Sur l'exemple de réalisation illustré, les canaux A 21,21' sont formés par des enceintes respectives débouchant en périphérie de l'organe de distribution principal 5 vers l'évidement de l'organe de distribution de secours 6 logeant l'organe de distribution principal 5.

Par ailleurs, l'organe de distribution de secours 6 comporte des deuxièmes canaux 22-22d (22,22a,22b,22c,22d) dits canaux B. Les canaux B 22-22d sont dédiés à une circulation du fluide entre les conduits A 17,17' et les conduits B 19,19' par l'intermédiaire des canaux A 21,21'. La circulation du fluide entre les conduits A 17,17' et les conduits B 19,19' est sélectivement obtenue selon diverses positions respectives de l'organe de distribution principal 5 manoeuvré par l'organe de commande 15.

Hors cas de grippage de l'organe de distribution principal 5, l'organe de distribution de secours 6 est maintenu en une position prédéfinie à l'intérieur du corps de distributeur 4. A cet effet, l'organe de distribution de secours 6 est bloqué sur le corps de distributeur 4 par l'intermédiaire d'une broche 23. La broche 23 est axialement montée mobile à l'intérieur du corps de distributeur 4 et coopère par emboîtement en appui glissant avec une cavité 24 ménagée dans l'organe de distribution de secours 6.

La mobilité axiale de la broche 23 est orientée transversalement, et plus spécifiquement orthogonalement, par rapport à l'axe de mobilité de l'organe de distribution de secours 6 de sorte que l'effort de blocage de l'organe de distribution de secours 6 sur le corps de distributeur 4 est optimisé.

La broche 23 comporte plus particulièrement une tête 25 conformée en sphère ou conformation analogue procurant ledit emboîtement en appui glissant de la tête 25 à l'intérieur de la cavité 24. La broche 23 est maintenue en position d'engagement par mise en coopération étroite entre la tête 25 et la cavité 24 tel que représenté sur les fig.1 à fig.5.

La broche 23 est maintenue en position d'engagement sous l'effet d'une poussée exercée par des moyens à déformation élastique 26 prenant des appuis antagonistes contre le corps de distributeur 4 et contre la broche 23. Lesdits appuis antagonistes sont appliqués axialement suivant l'axe général d'extension et de mobilité de la broche 23 à l'intérieur du corps de distributeur 4.

En cas de grippage de l'organe de distribution principal 5 à l'intérieur de l'organe de distribution de secours 6, l'entraînement de l'organe de distribution de secours 6 par l'organe de distribution principal 5 provoque un glissement de la tête 25 à l'intérieur de la cavité 24.

Un tel glissement relatif entre la tête 25 et la cavité 24 est significatif d'un grippage de l'organe de distribution principal 5 à l'intérieur de l'organe de distributeur de secours 6 et est provoqué à un seuil d'effort prédéterminé de mobilité relative entre l'organe de distribution de secours 6 et le corps de distributeur 4.

Ledit seuil d'effort est prédéterminé selon les efforts de friction entre l'organe de distribution de secours 6 et le corps de distributeur 4, selon l'effort de poussée exercée contre la broche 23 par les moyens à déformation élastique 26 et selon l'état de surface et la conformation de la surface d'appui glissant de la tête 25 contre la cavité 24, ladite surface d'appui étant préférentiellement à portée sphérique.

Dès lors qu'un mouvement de l'organe de distribution de secours 6 est provoqué, des moyens de manoeuvre 27 de la broche 23 sont mis en oeuvre. La broche 23 est déplacée à l'intérieur du corps de distributeur 4 depuis la position d'engagement vers une position de dégagement dans laquelle la broche 23 est totalement libérée d'une quelconque emprise par la cavité 24.

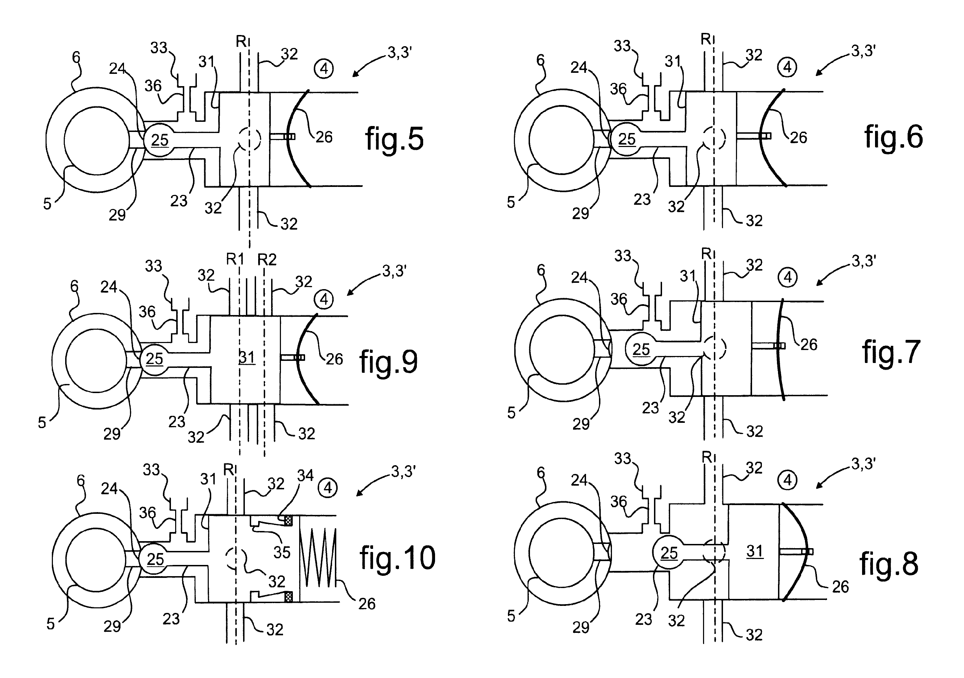

Sur la fig.1 et la fig.10, la broche 23 est maintenue en position d'engagement à l'intérieur de la cavité 24 par des moyens à déformation élastique 26 formés d'un ressort de compression par exemple. Sur les fig.2 à fig.9, la broche 23 est maintenue en position d'engagement à l'intérieur de la cavité 24 par des moyens à déformation élastique 26 formés d'un ressort à lamelle(s).

Sur la fig.1, un mouvement de l'organe de distribution de secours 6 à l'intérieur du corps de distributeur 4 provoque un glissement relatif entre la tête 25 et la cavité 24 et est détecté par des moyens de détection 28 qui provoquent la mise en oeuvre des moyens de manoeuvre 27.

Les moyens de détection 28 sont par exemple des moyens de détection d'une amorce de mobilité relative entre l'organe de distribution de secours 6 et le corps de distributeur 4 sous l'effet du grippage de l'organe de distribution principal 5 entraînant par friction l'organe de distribution de secours 6. Les moyens de manoeuvre 27 sont potentiellement des moyens de type quelconque aptes à déplacer la broche 23, tels que du type mécanique, du type électromagnétique, du type pneumatique ou du type chimique.

Sur les fig.2 à fig.10, il est avantageusement mis à profit la circulation du fluide sous pression à l'intérieur du distributeur pour former les moyens de manoeuvre 27. Plus particulièrement, la cavité 24 est formée du débouché d'un canal 29, dit canal C, formant un premier passage de fluide entre un quelconque conduit A 17, 17' ou conduit B 19,19' et une chambre 30 ménagée dans le corps de distributeur 4. La broche 23 est munie d'un piston 31 et ladite chambre 30 est une chambre de guidage en coulissement de la broche 23 vers la position de dégagement, le coulissement de la broche 23 étant provoqué sous l'effet de l'admission du fluide sous pression à l'intérieur de la chambre 30 par l'intermédiaire du canal C 29, de préférence via les canaux A 21, 21' afin de simplifier l'agencement structurel du distributeur hydraulique 3,3'.

Sur la fig.5 plus particulièrement, la broche 23 est maintenue en position d'engagement par les moyens à déformation élastique 26 formés par le ressort à lamelle(s) appliquant une poussée axiale contre la broche 23 en direction de l'organe de distribution de secours 6. La tête 25 est maintenue appliquée contre la cavité 24 en obturant le canal C 29. Hors cas de grippage de l'organe de distribution principal 5, l'organe de distribution de secours 6 est bloqué par la mise en coopération par brochage entre la tête 25 et la cavité 24.

Sur la fig.6, en cas de grippage de l'organe de distribution principal 5, l'organe de distribution de secours 6 tend à être entraîné en coulissement à l'intérieur du corps de distributeur 4 par l'organe de distribution principal 5. Aussi faible soit l'amplitude d'un tel mouvement de l'organe de distribution de secours 6, ce mouvement provoque un glissement de la tête 25 à l'intérieur de la cavité 24 dans une position intermédiaire de la broche 23.

En position intermédiaire de la broche 23, la tête 25 est maintenue engagée à l'intérieur de la cavité 24 en étant partiellement libérée de l'emprise exercée par la cavité 24 sur la broche 23. La broche 23 étant engagée de manière glissante à l'intérieur de la cavité 24 par l'intermédiaire de la tête 25, l'organe de distribution de secours 6 est maintenu en position intermédiaire de la broche 23 partiellement immobilisé sur le corps de distributeur 4. Une telle immobilisation partielle est considérée comme flottante en raison du glissement relatif provoqué entre la cavité 24 et la tête 25.

En position intermédiaire de la broche 23, une admission de fluide hors du canal C 29 vers l'intérieur de la chambre 30 est autorisée. Le fluide admis à l'intérieur de la chambre 30 repousse la broche 23 en position de dégagement, dans laquelle position de dégagement la tête 25 est totalement placée hors de la cavité 24 tel que représenté sur la fig.7.

Sur les fig.7 et fig.8, le blocage de l'organe de distribution de secours 6 sur le corps de distributeur 4 est inhibé en raison du passage de la broche 23 en position de dégagement.

En se reportant sur l'ensemble des fig.2 à fig.10, le corps de distributeur 4 comporte un passage de fluide, dit canal E 33, débouchant en amont du piston 31 dans le sens de déplacement de la broche 23 depuis la position d'engagement vers la position de dégagement. Le canal E 33 est un canal de liaison entre la chambre 30 et le conduit A d'évacuation 17', pour autoriser une éventuelle échappée de fluide en provenance du canal C 29 en position d'engagement de la broche 23 à l'intérieur de la cavité 24. Une telle éventuelle échappée de fluide peut être induite par une source de fuite inopportune entre la cavité 24 et la tête 25.

On remarquera par ailleurs que le fluide circulant à l'intérieur du conduit A d'évacuation 17' est à une pression inférieure à la pression du fluide circulant dans le conduit A d'admission 17. Une telle différence de pression est par exemple induite par la mise à l'air de la conduite A retour 18' vers la source de fluide 16 ou tout au moins par une mise sous pression du conduit A d'évacuation à une pression inférieure au fluide admis sous pression vers le distributeur hydraulique 3,3' au moyen de la pompe 14'.

L'admission du fluide dans la chambre 30 à travers le canal E 33 procure une lubrification de la chambre 30 et permet d'éviter une montée en pression excessive dans la chambre 30 en amont du piston 31 suivant le sens de circulation du fluide admis à l'intérieur de la chambre 30 depuis le canal C 29.

Par ailleurs, des canaux D 32 sont ménagés dans le corps de distributeur 4 entre la chambre 30 et respectivement chacun des conduits A 17,17' et des conduits B 19,19'. En position d'engagement de la broche 23 telle qu'illustrée sur les fig.2 à fig.5, les canaux D 32 sont obturés par le piston 31 de sorte que l'admission de fluide à l'intérieur des canaux D 32 soit inefficiente.

Sur les fig.2 à fig.8, les canaux D 32 débouchent sur la chambre 30 dans un même plan radial commun R. Sur la fig.9, les canaux D 32 en communication avec les conduits A 17,17' et les canaux D en communication avec les conduits B débouchent sur la chambre 30 dans des plans radiaux R1 et R2 respectifs.

Plus particulièrement, les canaux D 32 en communication avec les conduits A 17,17' débouchent sur la chambre 30 dans un premier plan radial R1 et les canaux D 32 en communication avec les conduits B 19,19' débouchent sur la chambre 30 dans un deuxième plan radial R1. Le premier plan radial R1 est de préférence placé en amont du deuxième plan radial R2 dans le sens de circulation du fluide admis à l'intérieur de la chambre 30 depuis le canal C 29.

Chaque distributeur hydraulique 3,3' est équipé de moyens de maintien de la broche 23 en position de dégagement, indépendamment d'une rupture de la mise en oeuvre des moyens de manoeuvre 27.

Sur les fig.2 à fig.9, lesdits moyens de maintien sont formés par le ressort à lamelle(s) 26. En position de dégagement de la broche 23 le ressort à lamelle(s) 26 est repoussé par la broche 23 en provoquant sa déformation suivant une courbure inverse à sa courbure initiale en position d'engagement de la broche 23. Dans cette position de courbure inversée, le ressort à lamelle(s) exerce un effort de traction sur la broche 23 dans le sens opposé au sens de la poussée qu'il exerce sur la broche 23 en position d'engagement.

Sur la fig.10, lesdits moyens de maintien sont formés par une agrafe 34 élastiquement déformable ménagée sur le corps de distributeur 4, l'agrafe 34 coopérant par emboîtement avec un logement 35 ménagé sur la broche 23.

Sur les fig.5 à fig.10 le canal E 33 étant en communication fluidique avec la chambre 30, il est opportun d'interdire une admission vers le canal E 33 du fluide admis sous pression dans la chambre 30 par l'intermédiaire du canal C 29 en position de dégagement de la broche 23. A cet effet, il est proposé de ménager une restriction 36 sur le canal E 33.

Une telle restriction 36 ne fait pas obstacle à une échappée du fluide admis inopportunément à l'intérieur de la chambre 30 sous l'effet d'une dite source de fuite entre la tête 25 et la cavité 24. Cependant, la restriction 36 permet d'augmenter la charge nécessaire à une évacuation hors de la chambre 30 du fluide admis sous pression depuis le canal A d'admission vers la chambre 30 à travers le canal E 33.

Par ailleurs en position de dégagement de la broche 23, les canaux D 32 sont placés en communication fluidique avec la chambre 30. Il en résulte que les conduits A 17,17' et les conduits B 19,19' sont placés en communication fluidique entre eux, avec pour effet de rendre inefficiente la pression de fluide exercée de part et d'autre de la tige 9 coopérant avec le corps de vérin 7,8 affecté au distributeur hydraulique 3,3'.

Dans le cas d'une servocommande comprenant un vérin hydraulique 2 à simple corps de vérin 7 tel qu'illustré sur les fig.1 et fig.2, des moyens de liaisons mécaniques 37 placent sous dépendance mécanique directe l'organe de commande 15 et l'organe de manoeuvre 14 des pales 1, de sorte que les pales 1 puissent être directement manoeuvrées par l'organe de manoeuvre 15 en évitant une exploitation de la servocommande défectueuse.

De tels moyens de liaison mécanique 37 sont potentiellement mis en oeuvre par le pilote humain du giravion ou sont spontanément mis en oeuvre en étant placé sous la dépendance d'un capteur 38 de l'inefficience de la pression de fluide exercée de part et d'autre de la tige 9. Un tel capteur 38 est par exemple formé de moyens de mesure de la pression du fluide circulant à travers les conduites B 20,20'.

Dans le cas d'une servocommande comprenant un vérin hydraulique 2 à multiple corps de vérin 7,8, l'inefficience de la pression de fluide exercée de part et d'autre de la tige 9 coopérant avec un corps de vérin 7,8 ne fait pas obstacle à la manoeuvre par l'organe de commande 15 de l'organe de distribution principal 5 d'un autre distributeur hydraulique affecté à un autre corps de vérin 7,8. Il est compris que ces dispositions sont applicable quelle que soit l'agencement du vérin hydraulique 2 selon lequel les corps de vérin 7,8 sont montés en tandem tel que représenté sur la fig.3 ou sont montés en parallèle tel que représenté sur la fig.4.

Les modalités de mobilité de la broche illustrées sur les fig.5 à fig.10 dans le cadre de moyens de manoeuvre du type hydraulique exploitant le fluide admis sous pression à l'intérieur du distributeur hydraulique 3,3', sont transposables sans effort particulier par substitution à un distributeur hydraulique illustré sur la fig.1 dans lequel les moyens de manoeuvre sont d'un quelconque autre type.

Les distributeurs hydrauliques 3,3' illustrés pour exemple sur les figures sont du type à tiroir, l'organe de distribution principal 5 et l'organe de distribution de secours 6 étant montés coulissants à l'intérieur du corps de distributeur 4. Il est cependant à considérer que les règles énoncées par la présente invention sont transposables sans effort particulier à des distributeurs hydrauliques 3,3' de type rotatifs, dans lesquels l'organe de distribution principal 5 et l'organe de distribution de secours 6 sont montés en mobilité tournante à l'intérieur du corps de distributeur 4.

En effet, l'axe général d'extension et de mobilité de la broche 5, et en corolaire la direction de poussée et/ou de traction exercée par les moyens à déformation élastique 26 sur la broche 23, sont orientés transversalement à l'axe de mobilité de l'organe de distribution principal 5 et de l'organe de distribution de secours 6.

Un tel agencement de la mobilité de la broche 23 permet une application aisée de l'invention à un distributeur hydraulique d'un quelconque type à tiroir ou type rotatif. En effet, les modalités de mobilité coulissante ou tournante de l'organe de distribution principal 5 et de l'organe de distribution de secours 6 à l'intérieur du corps de distributeur 4 du distributeur hydraulique 3,3' sont sans effet sur les conditions de mise en oeuvre et de mobilité de la broche 23 pour alternativement mettre en oeuvre ou inhiber le blocage par brochage entre l'organe de distribution de secours 6 et le corps de distributeur 4.

## Revendications

1. Distributeur hydraulique (3,3') double d'une servocommande de manoeuvre des pales (1) d'un rotor de giravion, le distributeur hydraulique (3,3') comprenant :
-) un corps, dit corps de distributeur (4), du distributeur hydraulique (3,3') comportant des premiers conduits, dits conduits A (17,17'), dédiés à une jonction hydraulique entre le distributeur hydraulique (3,3') et une source de fluide (16) sous pression, les conduits A (17,17') comprenant au moins un conduit d'admission, dit conduit A d'admission (17), procurant une admission du fluide depuis l'extérieur vers l'intérieur du distributeur hydraulique (3,3') et au moins un conduit d'évacuation, dit conduit A d'évacuation (17'), procurant une évacuation du fluide hors du distributeur hydraulique (3,3'), le corps de distributeur (4) comportant des deuxièmes conduits, dits conduits B (19,19'), dédiés à une jonction hydraulique entre le distributeur hydraulique (3,3') et un corps, dit corps de vérin (7,8), d'un vérin hydraulique (2) de la servocommande, les conduits B (19,19') comprenant un couple de conduits B procurant une circulation du fluide entre l'intérieur et l'extérieur du distributeur hydraulique (3,3'),
-) un organe de distribution principal (5) monté mobile à l'intérieur du corps de distributeur (4) et manoeuvrable par un organe de commande (15), l'organe de distribution principal (5) ménageant des premiers canaux, dits canaux A (21), dédiés à une circulation du fluide à travers le distributeur hydraulique (3,3') entre les conduits A (17,17') et les conduits B (19,19'), le conduit A d'admission (17) et le conduit A d'évacuation (17') étant en communication fluidique par l'intermédiaire des canaux A (21) sélectivement avec l'un ou l'autre des conduits B (19,19') selon des positions respectives de l'organe de distribution principal (5) à l'intérieur du corps de distributeur (4),
-) un organe de distribution de secours (6) interposé entre le corps de distributeur (4) et l'organe de distribution principal (5), l'organe de distribution de secours (6) logeant en mobilité l'organe de distribution principal (5) et étant monté mobile à l'intérieur du corps de distributeur (4), l'organe de distribution de secours (6) ménageant des deuxièmes canaux, dits canaux B (22,22d), dédiés à une circulation du fluide entre d'une part les canaux A (21,21') et d'autre part les conduits A (17,17') et les conduits B (19,19') sélectivement selon lesdites positions respectives de l'organe de distribution principal (5),
-) des moyens de positionnement de l'organe de distribution de secours (6) dans une position prédéfinie à l'intérieur du corps de distributeur (4), dans laquelle position prédéfinie de l'organe de distribution de secours (6) les canaux A (17,17') et les canaux B (19,19') sont en communication fluidique deux à deux, les moyens de positionnement mettant en oeuvre au moins des moyens à déformation élastique (26) prenant appui contre le corps de distributeur (4), une mobilité de l'organe de distribution de secours (6) à l'intérieur du corps de distributeur (4) conjointement avec l'organe de distribution principal (5) étant autorisée sous l'effet d'un entraînement par friction de l'organe de distribution de secours (6) par l'organe de distribution principal (5) en situation de grippage à l'intérieur de l'organe de distribution de secours (6) à l'encontre d'une poussée exercée par les moyens à déformation élastique (26),
**caractérisé en ce que** lesdits moyens de positionnement sont des moyens de blocage de l'organe de distribution de secours (6) sur le corps de distributeur (4) par une broche (23) montée mobile sur le corps de distributeur (4) et coopérant par emboîtement en appui glissant avec une cavité (24) de l'organe de distribution de secours (6), la broche (23) étant mobile entre une position d'engagement dans laquelle une tête (25) de la broche (23) est logée dans la cavité (24) sous l'effet de la poussée exercée contre la broche (23) par les moyens à déformation élastique (26) et une position de dégagement dans laquelle ladite tête (25) est dégagée totalement hors de la cavité (24) par des moyens de manoeuvre (27) de la broche (23) à l'encontre de la poussée exercée contre la broche (23) par les moyens à déformation élastique (26), la mise en oeuvre des moyens de manoeuvre (27) étant placée sous la dépendance d'une mobilité relative entre l'organe de distribution de secours et le corps de distributeur autorisant une libération au moins partielle de ladite cavité (24) par glissement de la tête (25) de la broche (23) à l'intérieur de la cavité (24).

2. Distributeur hydraulique selon la revendication 1,
**caractérisé en ce que** les moyens de manoeuvre (27) de la broche (23) sont des moyens de poussée fluidique de la broche (23) munie d'un piston contre lequel est appliqué le fluide admis sous pression à l'intérieur du distributeur hydraulique (3,3').

3. Distributeur hydraulique selon la revendication 2,
**caractérisé en ce que** la broche (23) est logée en mobilité dans une chambre (30) du corps de distributeur (4) et est agencée en pointeau d'obturation d'un premier passage de fluide, dit canal C (29) débouchant sur la chambre (30 à travers la cavité (24) et étant en communication fluidique avec l'un quelconque desdits conduits A (17,17') et conduits B (19,19'), un dégagement au moins partiel de la cavité (24) autorisant une admission à l'intérieur de la chambre (30) du fluide en provenance du canal C (29).

4. Distributeur hydraulique selon revendication 3,
**caractérisé en ce que** le canal C (29) est en communication fluidique avec le conduit A d'admission (17).

5. Distributeur hydraulique selon l'une quelconque des revendications 1 à 4,
**caractérisé en ce que** le distributeur hydraulique (3,3') comporte des moyens de mise en communication fluidique entre eux de l'ensemble des conduits A (17,17') et des conduits B (19,19') en position de dégagement de la broche (23).

6. Distributeur hydraulique selon la revendication 5,
**caractérisé en ce que** le corps de distributeur (4) comporte des deuxièmes passages de fluide, dit canaux D (32), lesdits canaux D (32) étant des passages de fluide respectivement pour un premier canal D (32) entre la chambre (30) et le conduit A d'admission (17), pour un deuxième canal D (32) entre la chambre (30) et le conduit A d'évacuation (17'), pour un troisième canal D (32) entre la chambre (30) et l'un quelconque des conduits B (19,19') et pour un quatrième canal D (32) entre la chambre (30) et l'autre canal B (19,19'), les débouchés sur la chambre (30) des canaux D (32) étant conjointement obturés par le piston (31) en position d'engagement de la broche (23) et étant dégagés du piston (31) en position de dégagement de la broche (23).

7. Distributeur hydraulique selon la revendication 6,
**caractérisé en ce que** les canaux D (32) débouchent sur la chambre (30) dans un même plan radial (R) considéré par rapport à la direction axiale de déplacement de la broche (23) à l'intérieur de la chambre (30), la mise en communication fluidique entre eux de l'ensemble des conduits A (17,17') et des conduits B (19, 19') étant effectuée simultanément.

8. Distributeur hydraulique selon la revendication 6,
**caractérisé en ce que** les canaux D (32) débouchent sur la chambre (30) dans différents plans radiaux (R1,R2) par rapport à la direction de déplacement de la broche (23) à l'intérieur de la chambre (30), la mise en communication fluidique entre eux des conduits A (17,17') et des conduits B (19,19') étant effectuée progressivement.

9. Distributeur hydraulique selon l'une quelconque des revendications 3 à 8,
**caractérisé en ce que** la chambre (30) est en communication fluidique avec le conduit A d'évacuation (17') par l'intermédiaire d'un troisième passage de fluide, dit canal E (33), ledit canal E (33) débouchant dans une quelconque position de la broche (23) en amont du piston (31) dans le sens de déplacement de la broche (23) depuis la position d'engagement vers la position de dégagement.

10. Distributeur hydraulique selon la revendication 9,
**caractérisé en ce que** le canal E (33) comporte une restriction (36) de section.

11. Distributeur hydraulique selon l'une quelconque des revendications 1 à 10,
**caractérisé en ce que** le distributeur hydraulique (3,3') comporte des moyens de maintien de la broche (23) en position de dégagement indépendamment d'une rupture de la mise en oeuvre des moyens de manoeuvre (27).

12. Distributeur hydraulique selon la revendication 11,
**caractérisé en ce que** les moyens de maintien sont formés par lesdits moyens à déformation élastique (26) agencés en un ressort à au moins une lamelle, ledit ressort à lamelle(s) étant fixé au corps de distributeur (4) et étant en prise bidirectionnelle sur la broche (23), le ressort à lamelle(s) exerçant une poussée contre la broche (23) en position d'engagement et une traction sur la broche (23) en position de dégagement en conséquence de sa déformation provoquée par le passage de la broche (23) en position de dégagement.

13. Distributeur hydraulique selon la revendication 11,
**caractérisé en ce que** les moyens de maintien sont du type à emboîtement élastique et comprennent une agrafe (34) élastiquement déformable coopérant avec un logement (35), l'agrafe (34) et le logement (35) étant respectivement ménagés indifféremment sur le corps de distributeur (4) et sur la broche (23).

14. Distributeur hydraulique selon l'une quelconque des revendications 1 à 13,
**caractérisé en ce que** le distributeur hydraulique (3,3') est du type à tiroir, l'organe de distribution principal (5) et l'organe de distribution de secours (6) étant montés mobiles en translation à l'intérieur du corps de distributeur (4).

15. Distributeur hydraulique selon l'une quelconque des revendications 1 à 13,
**caractérisé en ce que** le distributeur hydraulique (3,3') est du type rotatif, l'organe de distribution principal (5) et l'organe de distribution de secours (6) étant montés mobiles en débattement angulaire à l'intérieur du corps de distributeur (4).

16. Distributeur hydraulique selon l'une quelconque des revendications 1 à 15,
**caractérisé en ce que** la surface de portée de la tête (25) de la broche (23) à l'intérieur de la cavité (24) est une surface à portée sphérique.

17. Distributeur hydraulique selon la revendication 1,
**caractérisé en ce que** la mise en oeuvre des moyens de manoeuvre (27) est placée sous la dépendance de moyens de détection (28) d'un déplacement relatif entre l'organe de distribution principal (5) et l'organe de distribution de secours (6).

18. Servocommande de manoeuvre des pales (1) d'un rotor de giravion, la servocommande comprenant au moins un vérin hydraulique (2) à au moins un corps de vérin (7,8) double-effet et au moins un distributeur hydraulique (3,3') selon l'une quelconque des revendications 1 à 17.

19. Servocommande selon la revendication 18, la servocommande comprenant au moins un vérin hydraulique (2) à plusieurs corps de vérin (7,8) double-effet, chacun des corps de vérin (7,8) étant alimenté en fluide par un distributeur hydraulique (3,3') qui lui est affecté.

20. Servocommande selon la revendication 19, la servocommande comprenant au moins un vérin hydraulique (2) double corps de vérin (7,8) double-effet,
**caractérisé en ce que :**
-) chacun des corps de vérin (7,8) du vérin hydraulique (2) est en communication fluidique avec un distributeur hydraulique (3,3') qui lui est affecté, les conduits B (19,19') de chacun des distributeurs hydrauliques (3,3') étant en communication fluidique avec un corps de vérin (7,8) respectif,
-) l'un quelconque des conduits B (19,19') d'un premier distributeur hydraulique (3,3') étant en communication fluidique avec un premier passage de tête (10) d'un premier corps de vérin et l'autre des conduits B (19,19') du premier distributeur hydraulique (3,3') étant en communication fluidique avec un premier passage de fond (11) du premier corps de vérin,
-) l'un quelconque des conduits B (19,19') d'un deuxième distributeur hydraulique (3,3') étant en communication fluidique avec un deuxième passage de tête (10) d'un deuxième corps de vérin (7,8) et l'autre des conduits B (19,19') du deuxième distributeur hydraulique (3,3') étant en communication fluidique avec un deuxième passage de fond (11) du deuxième corps de vérin (7,8),
-) les organes de distribution principaux (5) de chacun des distributeurs hydrauliques (3,3') étant conjointement en prise sur un organe de manoeuvre (15) commun dont la mise en oeuvre régule la distribution du fluide à travers les deux distributeurs hydrauliques (3,3').

21. Servocommande selon la revendication 20, dans laquelle servocommande les corps de vérin (7,8) du vérin hydraulique (2) sont montés en tandem en logeant conjointement une tige (9) commune.

22. Servocommande selon la revendication 20, dans laquelle servocommande les corps de vérin (7,8) du vérin hydraulique (2) sont montés en parallèle, les corps de vérin (7,8) logeant des tiges (9) respectives mécaniquement liées entre elles.

## Patentansprüche

1. Hydraulischer Doppelverteiler (3, 3') einer Servosteuerung zum Steuern von Blättern (1) eines Rotors eines Drehflügelflugzeugs, wobei der hydraulische Verteiler (3, 3') aufweist:
-) einen Körper, Verteilerkörper (4) genannt, des hydraulischen Verteilers (3, 3') mit ersten Leitungen, Leitungen A (17, 17') genannt, die dazu bestimmt sind, eine hydraulische Verbindung zwischen dem hydraulischen Verteiler (3, 3') und einer Druckfluidquelle (16) herzustellen, wobei die Leitungen A (17, 17') mindestens eine Einlassleitung, genannt Einlassleitung A (17), die für einen Einlass des Fluids von außerhalb des Verteilers zum Inneren des hydraulischen Verteilers (3, 3') sorgt, und mindestens eine Auslassleitung, genannt Auslassleitung A (17'), die für einen Auslass des Fluids aus dem hydraulischen Verteiler (3, 3') sorgt, aufweisen, wobei der Verteilerkörper (4) zweite Leitungen, genannt Leitungen B (19, 19') aufweist, die dazu bestimmt sind, eine hydraulische Verbindung zwischen dem hydraulischen Verteiler (3, 3') und einem Körper, genannt Kolben-Zylinder-Einheits-Körper (7, 8), einer hydraulischen Kolben-Zylinder-Einheit (2) der Servosteuerung herzustellen, wobei die Leitungen B (19, 19') ein Paar von Leitungen B aufweisen, die für eine Zirkulation des Fluids zwischen dem Inneren und dem Äußeren des hydraulischen Verteilers (3, 3') sorgen,
-) ein Hauptverteilungsorgan (5), das beweglich im Inneren des Verteilerkörpers (4) montiert ist, und das durch ein Steuerorgan (15) manövrierbar ist, wobei das Hauptverteilungsorgan (5) erste Kanäle, genannt Kanäle A (21), die für eine Zirkulation des Fluids durch den hydraulischen Verteiler (3, 3') zwischen den Leitungen A (17, 17') und den Leitungen B (19, 19') sorgen, aufweist, wobei die Einlassleitung A (17) und die Auslassleitung A (17') über Kanäle A (21) wahlweise in Fluidverbindung stehen mit der einen oder der anderen der Leitungen B (19, 19'), je nach den jeweiligen Stellungen des Hauptverteilungsorgans (5) im Inneren des Verteilerkörpers (4),
-) ein Hilfsverteilungsorgan (6), das zwischen dem Verteilerkörper (4) und dem Hauptverteilungsorgan (5) angeordnet ist, wobei das Hilfsverteilungsorgan (6) das Hauptverteilungsorgan (5) beweglich lagert, und beweglich im Inneren des Verteilerkörpers (4) montiert ist, wobei das Hilfsverteilungsorgan (6) zweite Kanäle bildet, Kanäle B (22, 22d) genannt, die selektiv für eine Zirkulation des Fluids zwischen einerseits den Kanälen A (21, 21') und andererseits den Leitungen A (17, 17') und den Leitungen B (19, 19') bestimmt sind, gemäß den jeweiligen Positionen des Hauptverteilungsorgans (5),
-) Mittel zum Positionieren des Hilfsverteilungsorgans (6) in einer vordefinierten Position im Inneren des Verteilerkörpers (5), wobei in dieser vordefinierten Position des Hilfsverteilungsorgans (6) die Kanäle A (17, 17') und die Kanäle B (19, 19') jeweils zu zweit in Fluidverbindung stehen, wobei die Positionierungsmittel mindestens elastisch verformbare Mittel (26) in Betrieb setzen, die gegen den Verteilerkörper (4) andrücken, wobei eine Beweglichkeit des Hilfsverteilungsorgans (6) im Inneren des Verteilerkörpers (4) zusammen mit dem Hauptverteilungsorgan (5) zugelassen wird durch den Effekt eines Antriebs durch Reibung des Hilfsverteilungsorgans (6) durch das Hauptverteilungsorgan (5) im Fall eines Festfressens im Inneren des Hilfsverteilungsorgans (6) gegenüber einem Druck, der von den elastisch verformbaren Mitteln (26) ausgeübt wird,
**dadurch gekennzeichnet, dass** die Positionierungsmittel Mittel zum Blockieren des Hilfsverteilungsorgans (6) auf dem Verteilerkörper (4) durch einen Stift (23) sind, der beweglich auf dem Verteilerkörper (4) montiert ist und mit einer Ausnehmung (24) des Hilfsverteilungsorgans (6) durch gleitendes Einfügen zusammenwirkt, wobei der Stift (23) beweglich ist zwischen einer Eingriffsstellung, in der ein Kopf (25) des Stiftes (23) in der Ausnehmung (24) gelagert ist, unter Einwirkung des Drucks, der gegen den Stift (23) durch die elastisch verformbaren Mittel (26) ausgeübt wird, und einer entkoppelten Position, in der der Kopf (25) vollständig aus der Ausnehmung (24) durch Manövriermittel (27) des Stifts (23) entgegen dem Druck, der gegen den Stift (23) durch die elastisch verformbaren Mittel (26) ausgeübt wird, gelöst ist, wobei die Inbetriebsetzung der Manövriermittel (27) von einer relativen Beweglichkeit zwischen dem Hilfsverteilungsorgan und dem Verteilerkörper abhängig gemacht wird, der eine mindestens teilweise Befreiung der Ausnehmung (24) durch Gleiten des Kopfes (25) im Inneren der Ausnehmung (24) ermöglicht.

2. Hydraulischer Verteiler nach Anspruch 1,
**dadurch gekennzeichnet, dass** die Manövriermittel (27) des Stiftes (23) Fluidschubmittel des Stiftes (23) sind, die mit einem Zylinder versehen sind, der mit dem Fluid beaufschlagt ist, welches unter Druck in das Innere des hydraulischen Verteilers (3, 3') eingelassen wird.

3. Hydraulischer Verteiler nach Anspruch 2,
**dadurch gekennzeichnet, dass** der Stift (23) beweglich in einer Kammer (30) des Verteilerkörpers (4) gelagert ist und als Verschluss-Düsennadel eines ersten Fluidddurchgangs, genannt Kanal C (29), ausgebildet ist, der in der Kammer (30) durch den Hohlraum (24) mündet und in Fluidverbindung mit einer beliebigen der Leitungen A (17, 17') und der Leitungen B (19, 19') steht, wobei eine zumindest teilweise Öffnung des Hohlraums (24) das Einlassen des Fluids, welches aus dem Kanal C (29) stammt, in das Innere der Kammer (30) erlaubt.

4. Hydraulischer Verteiler nach Anspruch 3,
**dadurch gekennzeichnet, dass** der Kanal C (29) in Fluidverbindung mit der Einlassleitung A (17) steht.

5. Hydraulischer Verteiler nach einem der Ansprüche 1 bis 4,
**dadurch gekennzeichnet, dass** der hydraulische Verteiler (3, 3') Mittel zur Fluidverbindung zwischen der Gruppe der Leitungen A (17, 17') und der der Leitungen B (19, 19') in Öffnungsstellung des Stiftes (23) aufweist.

6. Hydraulischer Verteiler nach Anspruch 5,
**dadurch gekennzeichnet, dass** der Verteilerkörper (4) zweite Flu-iddurchgänge, genannt Kanäle D (32) aufweist, wobei die Kanäle D (32) Fluiddurchgänge sind für einen ersten Kanal D (32) zwischen der Kammer (30) und der Einlassleitung A (17) für einen zweiten Kanal D (32) zwischen der Kammer (30) und der Auslassleitung A (17') bzw. für einen dritten Kanal D (32) zwischen der Kammer (30) und einer beliebigen der Leitungen B (19, 19'), und für einen vierten Kanal D (32) zwischen der Kammer (30) und dem anderen Kanal B (19, 19'), wobei die Mündungen in der Kammer (30) der Kanäle D (32) durch den Kolben (31) in Eingriffsposition des Stiftes (23) gemeinsam verschlossen sind, und in der Lösungsstellung des Stiftes (23) von dem Kolben (31) befreit sind.

7. Hydraulischer Verteiler nach Anspruch 6,
**dadurch gekennzeichnet, dass** die Kanäle D (32) in der Kammer (30) in derselben radialen Ebene (R), betrachtet bezüglich der Axialrichtung der Bewegung des Stiftes (23) im Inneren der Kammer (30), liegen, wobei das fluidmäßige Verbinden der Gruppe der Leitungen A (17, 17') untereinander und der Leitungen B (19, 19') gleichzeitig erfolgt.

8. Hydraulischer Verbinder nach Anspruch 6,
**dadurch gekennzeichnet, dass** die Kanäle D (32) in der Kammer (30) in unterschiedlichen radialen Ebenen (R1, R2) bezüglich der Bewegungsrichtung des Stiftes (23) im Inneren der Kammer (30) münden, wobei das fluidmäßige Verbinden der Leitungen A (17, 17') und der Leitungen B (19, 19') untereinander schrittweite erfolgt.

9. Hydraulischer Verteiler nach einem der Ansprüche 3 bis 8,
**dadurch gekennzeichnet, dass** die Kammer (30) in Fluidverbindung mit der Auslassleitung A (17') über einen dritten Fluiddurchgang, Kanal E (33) genannt, steht, wobei der Kanal E (33) an einer beliebigen Stelle des Stiftes (23) über den Kolben (31) in Bewegungsrichtung des Stiftes (23) von der Eingriffsstellung zur Entkopplungsstellung mündet.

10. Hydraulischer Verteiler nach Anspruch 9,
**dadurch gekennzeichnet, dass** der Kanal E (33) eine Querschnittsverjüngung (36) aufweist.

11. Hydraulischer Verteiler nach einem der Ansprüche 1 bis 10,
**dadurch gekennzeichnet, dass** der hydraulische Verteiler (3, 3') Mittel zum Halten des Stiftes (23) in einer Entkopplungsstellung aufweist, unabhängig von einer Unterbrechung der Betätigung der Manövriermittel (27).

12. Hydraulischer Verteiler nach Anspruch 11,
**dadurch gekennzeichnet, dass** die Haltemittel gebildet werden durch die elastisch verformbaren Mittel (26), bestehend aus einer Feder mit mindestens einem Federblatt, wobei die Feder mit Federblatt bzw. mit Federblättern am Verteilerkörper (4) befestigt ist und in zwei Richtungen mit dem Stift (23) in Eingriff steht, wobei die Feder mit Federblatt bzw. mit Federblättern einen Druck gegen den Stift (23) in der Eingriffsstellung ausübt und eine Zugbeanspruchung des Stiftes (23) in entkoppelter Stellung, als Folge ihrer Verformung, hervorgerufen durch den Durchgang des Stiftes (23) in entkoppelter Stellung ausübt.

13. Hydraulischer Verteiler nach Anspruch 11,
**dadurch gekennzeichnet, dass** die Haltemittel vom Typ einer elastischen Muffenverbindung sind und eine elastisch verformbare Klammer (34) aufweisen, die mit einem Lager (35) zusammenwirkt, wobei die Klammer (34) und das Lager (35) jeweils unterschiedslos auf dem Verteilerkörper oder dem Stift (23) angeordnet sind.

14. Hydraulischer Verteiler nach einem der Ansprüche 1 bis 13,
**dadurch gekennzeichnet, dass** der hydraulische Verteiler (3, 3') vom Schiebertyp ist, wobei das Hauptverteilungsorgan (5) und das Hilfsverteilungsorgan (6) translatorisch beweglich im Inneren des Verteilerkörpers (4) montiert sind.

15. Hydraulischer Verteiler nach einem der Ansprüche 1 bis 13,
**dadurch gekennzeichnet, dass** der hydraulische Verteiler (3, 3') vom drehbaren Typ ist, wobei das Hauptverteilungsorgan (5) und das Hilfsverteilungsorgan (6) schwenkbeweglich im Inneren des Verteilerkörpers (4) montiert sind.

16. Hydraulischer Verteiler nach einem der Ansprüche 1 bis 15,
**dadurch gekennzeichnet, dass** die Auflagefläche des Kopfes (25) des Stiftes (23) im Inneren des Hohlraums (24) eine kreisförmige Fläche ist.

17. Hydraulischer Verteiler nach Anspruch 1,
**dadurch gekennzeichnet, dass** der Betrieb der Manövriermittel (27) abhängig gemacht wird von Erfassungsmitteln (28) einer Relativbewegung zwischen dem Hauptverteilungsorgan und dem Hilfsverteilungsorgan (6).

18. Servosteuerung der Betätigung von Blättern (1) eines Rotors eines Drehflügelflugzeugs, wobei die Servosteuerung mindestens eine hydraulische Kolben-Zylinder-Einheit (2) aufweist mit mindestens einem Körper (7, 8) einer doppelt wirkenden Kolben-Zylinder-Einheit und mit mindestens einem hydraulischen Verteiler (3, 3') nach einem der Ansprüche 1-17.

19. Servosteuerung nach Anspruch 18, wobei die Servosteuerung mindestens eine hydraulische Kolben-Zylinder-Einheit (2) mit mehreren Körpern (7, 8) einer Kolben-Zylinder-Einheit mit doppelter Wirkung aufweist, wobei jeder der Körper (7, 8) der Kolben-Zylinder-Einheit von einem ihm zugeordneten hydraulischen Verteiler (3, 3') mit Fluid gespeist wird.

20. Servosteuerung nach Anspruch 19, wobei die Servosteuerung mindestens eine hydraulische Kolben-Zylinder-Einheit (2) mit doppeltem Körper (7, 8) der doppelt wirkenden Kolben-Zylinder-Einheit aufweist,
**dadurch gekennzeichnet, dass**
-) jeder der Körper (7, 8) der hydraulischen Kolben-Zylinder-Einheit (2) in Fluidverbindung mit einem hydraulischen Verteiler (3, 3') steht, der ihm zugeordnet ist, wobei die Leitungen B (19, 19') eines jeden hydraulischen Verteilers (3, 3') in Fluidverbindung mit dem jeweiligen Körper (7, 8) der Kolben-Zylinder-Einheit stehen,
-) eine beliebige der Leitungen B (19, 19') eines ersten hydraulischen Verteilers (3, 3') in Fluidverbindung mit einem ersten Durchgang des Kopfes (10) eines ersten Körpers der Kolben-Zylinder-Einheit steht, und die andere der Leitungen B (19, 19') des ersten hydraulischen Verteilers (3, 3') in Fluidverbindung mit einem ersten Durchgang (11) am Boden des ersten Körpers der Kolben-Zylinder-Einheit steht,
-) eine beliebige der Leitungen B (19, 19') eines zweiten hydraulischen Verteilers (3, 3') in Fluidverbindung mit einem zweiten Durchgang des Kopfes (10) eines zweiten Körpers (7, 8) der Kolben-Zylinder-Einheit steht, und die andere der Leitungen B (19, 19') des zweiten hydraulischen Verteilers (3, 3') in Fluidverbindung mit einem zweiten Durchgang (11) am Boden des zweiten Körpers (7, 8) der Kolben-Zylinder-Einheit steht,
-) die Hauptverteilungsorgane (5) eines jeden hydraulischen Verteilers (3, 3') gemeinsam in Eingriff mit einem gemeinsamen Manövrierorgan (15) stehen, dessen Betätigung die Fluidverteilung durch die beiden hydraulischen Verteiler (3, 3') regelt.

21. Servosteuerung nach Anspruch 20, bei der die Körper (7, 8) der hydraulischen Kolben-Zylinder-Einheit in Tandem-Anordnung angeordnet sind, und zusammen eine gemeinsame Stange (9) beherbergen.

22. Servosteuerung nach Anspruch 20, bei der die Körper (7, 8) der hydraulischen Kolben-Zylinder-Einheit (2) parallel zueinander angeordnet sind, wobei die Körper (7, 8) der Kolben-Zylinder-Einheit Stangen (9) beherbergen, die jeweils mechanisch miteinander verbunden sind.

## Claims

1. Double hydraulic distributor (3,3') of a servo-control for manoeuvring blades (1) of a rotorcraft rotor, the hydraulic distributor (3,3') comprising:
-) a body, called a distributor body (4), of the hydraulic distributor (3,3') comprising first conduits, called A conduits (17,17'), dedicated to a hydraulic connection between the hydraulic distributor (3,3') and a source of fluid (16) under pressure, the A conduits (17,17') comprising at least one admission conduit, called an admission A conduit (17), providing an admission of the fluid from the outside to the inside of the hydraulic distributor (3,3') and at least one discharge conduit, called a discharge A conduit (17'), providing a discharge of the fluid from the hydraulic distributor (3,3'), the distributor body (4) comprising second conduits, called B conduits (19, 19'), dedicated to a hydraulic connection between the hydraulic distributor (3,3') and a body, called an actuator body (7,8), of a hydraulic actuator (2) of the servo-control, the B conduits (19,19') comprising a pair of B conduits providing a flow of the fluid between the inside and the outside of the hydraulic distributor (3,3'),
-) a main distribution member (5) movably mounted inside the distributor body (4) and manoeuvrable by a control member (15), the main distribution member (5) providing first channels, called A channels (21), dedicated to a flow of the fluid through the hydraulic distributor (3,3') between the A conduits (17,17') and the B conduits (19,19'), the admission A conduit (17) and the discharge A conduit (17') being in fluid communication via the A channels (21) selectively with one or the other of the B conduits (19,19') depending on the respective positions of the main distribution member (5) inside the distributor body (4),
-) an emergency distribution member (6) interposed between the distributor body (4) and the main distribution member (5), the emergency distribution member (6) movably housing the main distribution member (5) and being movably mounted inside the distributor body (4), the emergency distribution member (6) providing second channels, called B channels (22,22d), dedicated to a flow of the fluid between on one side the A channels (21,21') and on the other side the A conduits (17,17') and the B conduits (19,19') selectively depending on the respective positions of the main distribution member (5),
-) positioning means for positioning the emergency distribution member (6) in a predefined position inside the distributor body (4), in which predefined position of the emergency distribution member (6) the A channels (17,17') and the B channels (19,19') are in fluid communication two to two, the positioning means using at least elastically deformable means (26) bearing against the distributor body (4), a movability of the emergency distribution member (6) inside the distributor body (4) together with the main distribution member (5) being allowed under the effect of an entrainment by friction of the emergency distribution member (6) by the main distribution member (5) in a situation of seizing inside the emergency distribution member (6) against a thrust exerted by the elastically deformable means (26),
**characterised in that** said positioning means are means for blocking the emergency distribution member (6) on the distributor body (4) by a pin (23) movably mounted on the distributor body (4) and cooperating by sliding bearing engagement with a cavity (24) of the emergency distribution member (6), the pin (23) being movable between an engaged position in which a head (25) of the pin (23) is received in the cavity (24) under the effect of the thrust exerted against the pin (23) by the elastically deformable means (26) and a disengaged position in which said head (25) is totally disengaged from the cavity (24) by manoeuvring means (27) for manoeuvring the pin (23) against the thrust exerted against the pin (23) by the elastically deformable means (26), the operation of the manoeuvring means (27) being placed under the dependence of a relative movability between the emergency distribution member and the distributor body allowing at least partial freeing of said cavity (24) by sliding of the head (25) of the pin (23) inside the cavity (24).

2. Hydraulic distributor according to claim 1,
**characterised in that** the manoeuvring means (27) for manoeuvring the pin (23) are means for fluid thrust of the pin (23) which is provided with a piston against which is applied the fluid admitted under pressure into the inside of the hydraulic distributor (3,3').

3. Hydraulic distributor according to claim 2,
**characterised in that** the pin (23) is movably housed in a chamber (30) of the distributor body (4) and is arranged as a needle for closing a first fluid passage, called a C channel (29), opening out into the chamber (30 through the cavity (24) and being in fluid communication with any one of said A conduits (17,17') and B conduits (19,19'), an at least partial clearance of the cavity (24) allowing fluid to be admitted into the inside of the chamber (30) from the C channel (29).

4. Hydraulic distributor according to claim 3,
**characterised in that** the C channel (29) is in fluid communication with the admission A conduit (17).

5. Hydraulic distributor according to any one of claims 1 to 4,
**characterised in that** the hydraulic distributor (3,3') comprises means for establishing fluid communication between all of the A conduits (17,17') and the B conduits (19,19') in the disengaged position of the pin (23).

6. Hydraulic distributor according to claim 5,
**characterised in that** the distributor body (4) comprises second fluid passages, called D channels (32), said D channels (32) being fluid passages respectively for a first D channel (32) between the chamber (30) and the admission A conduit (17), for a second D channel (32) between the chamber (30) and the discharge A conduit (17'), for a third D channel (32) between the chamber (30) and any one of the B conduits (19,19') and for a fourth D channel (32) between the chamber (30) and the other B channel (19,19'), the outlets to the chamber (30) of the D channels (32) being closed off jointly by the piston (31) in the engaged position of the pin (23) and being uncovered by the piston (31) in the disengaged position of the pin (23).

7. Hydraulic distributor according to claim 6,
**characterised in that** the D channels (32) open out into the chamber (30) in a same radial plane (R) considered relative to the axial displacement direction of the pin (23) inside the chamber (30), the fluid communication being established between all of the A conduits (17,17') and the B conduits (19,19') simultaneously.

8. Hydraulic distributor according to claim 6,
**characterised in that** the D channels (32) open out into the chamber (30) in different radial planes (R1,R2) relative to the displacement direction of the pin (23) inside the chamber (30), the fluid communication being established progressively between the A conduits (17,17') and the B conduits (19,19').

9. Hydraulic distributor according to any one of claims 3 to 8,
**characterised in that** the chamber (30) is in fluid communication with the discharge A conduit (17') via a third fluid passage, called an E channel (33), said E channel (33) opening out into any position of the pin (23) upstream from the piston (31) in the displacement direction of the pin (23) from the engaged position towards the disengaged position.

10. Hydraulic distributor according to claim 9,
**characterised in that** the E channel (33) comprises a section constriction (36).

11. Hydraulic distributor according to any one of claims 1 to 10,
**characterised in that** the hydraulic distributor (3,3') comprises holding means for holding the pin (23) in the disengaged position independently of an interruption in the operation of the manoeuvring means (27).

12. Hydraulic distributor according to claim 11,
**characterised in that** the holding means are formed by said elastically deformable means (26) arranged as a leaf spring with at least one leaf, said leaf spring being fastened to the distributor body (4) and being bidirectionally engaged on the pin (23), the leaf spring exerting a thrust against the pin (23) in the engaged position and a traction on the pin (23) in the disengaged position as a result of its deformation caused by the pin (23) passing into the disengaged position.

13. Hydraulic distributor according to claim 11,
**characterised in that** the holding means are of the elastic engagement type and comprise an elastically deformable clip (34) cooperating with a housing (35), the clip (34) and the housing (35) being respectively arranged equally well on the distributor body (4) and on the pin (23).

14. Hydraulic distributor according to any one of claims 1 to 13,
**characterised in that** the hydraulic distributor (3,3') is of the slide type, the main distribution member (5) and the emergency distribution member (6) being mounted to move in translation inside the distributor body (4).

15. Hydraulic distributor according to any one of claims 1 to 13,
**characterised in that** the hydraulic distributor (3,3') is of the rotary type, the main distribution member (5) and the emergency distribution member (6) being mounted to move in angular deflection inside the distributor body (4).

16. Hydraulic distributor according to any one of claims 1 to 15,
**characterised in that** the bearing surface of the head (25) of the pin (23) for bearing against the inside of the cavity (24) is a spherical bearing surface.

17. Hydraulic distributor according to claim 1,
**characterised in that** the operation of the manoeuvring means (27) is placed under the dependence of detecting means (28) for detecting a relative displacement between the main distribution member (5) and the emergency distribution member (6).

18. Servo-control for manoeuvring blades (1) of a rotorcraft rotor, the servo-control comprising at least one hydraulic actuator (2) having at least one double-acting actuator body (7,8) and at least one hydraulic distributor (3,3') according to any one of claims 1 to 17.

19. Servo-control according to claim 18, the servo-control comprising at least one hydraulic actuator (2) having a plurality of double-acting actuator bodies (7,8), each of the actuator bodies (7,8) being fed with fluid by a hydraulic distributor (3,3') associated therewith.

20. Servo-control according to claim 19, the servo-control comprising at least one hydraulic actuator (2) two double-acting actuator bodies (7,8),
**characterised in that**:
-) each actuator body (7,8) of the hydraulic actuator (2) is in fluid communication with a hydraulic distributor (3,3') associated therewith, the B conduits (19,19') of each of the hydraulic distributors (3,3') being in fluid communication with a respective actuator body (7,8),
-) any one of the B conduits (19,19') of a first hydraulic distributor (3,3') being in fluid communication with a first top passage (10) of a first actuator body and the other of the B conduits (19,19') of the first hydraulic distributor (3,3') being in fluid communication with a first bottom passage (11) of the first actuator body,
-) any one of the B conduits (19,19') of a second hydraulic distributor (3,3') being in fluid communication with a second top passage (10) of a second actuator body (7,8) and the other of the B conduits (19,19') of the second hydraulic distributor (3,3') being in fluid communication with a second bottom passage (11) of the second actuator body (7,8),
-) the main distribution members (5) of each of the hydraulic distributors (3,3') being jointly engaged on a common manoeuvring member (15), the operation of which regulates the distribution of the fluid through the two hydraulic distributors (3,3').

21. Servo-control according to claim 20, in which servo-control the actuator bodies (7,8) of the hydraulic actuator (2) are mounted in tandem, together housing a common rod (9).

22. Servo-control according to claim 20, in which servo-control the actuator bodies (7,8) of the hydraulic actuator (2) are mounted in parallel, the actuator bodies (7,8) housing respective rods (9) mechanically connected to one another.
